(19) Europäisches Patentamt
European Patent Office
Office européen des brevets

(11) EP 0 428 271 B1

(12) **EUROPEAN PATENT SPECIFICATION**

(45) Date of publication and mention of the grant of the patent:
**29.05.1996 Bulletin 1996/22**

(51) Int Cl.6: **G11B 11/10**

(21) Application number: **90311320.7**

(22) Date of filing: **16.10.1990**

(54) **Magneto-optical recording medium and apparatus**

Magnetooptischer Aufzeichnungsträger und -gerät

Milieu et appareil d'enregistrement magnéto-optique

(84) Designated Contracting States:
**DE FR GB NL**

(30) Priority: **14.11.1989 JP 296858/89**
**22.02.1990 JP 43235/90**

(43) Date of publication of application:
**22.05.1991 Bulletin 1991/21**

(73) Proprietor: **MITSUBISHI DENKI KABUSHIKI KAISHA**
**Tokyo (JP)**

(72) Inventors:
- **Nakaki, Yoshiyuki, c/o Mitsubishi Denki K.K. Amagasaki-shi, Hyogo-Ken (JP)**
- **Tokunaga, Takashi, c/o Mitsubishi Denki K.K. Amagasaki-shi, Hyogo-Ken (JP)**
- **Tsutsumi, Kazuhiko, c/o Mitsubishi Denki K.K. Amagasaki-shi, Hyogo-Ken (JP)**
- **Fukami, Tatsuya, c/o Mitsubishi Denki K.K. Amagasaki-shi, Hyogo-Ken (JP)**
- **Taguchi, Motohisa, c/o Mitsubishi Denki K.K. Amagasaki-shi, Hyogo-Ken (JP)**

(74) Representative: **Barnard, Eric Edward et al**
**BROOKES & MARTIN**
**High Holborn House**
**52/54 High Holborn**
**London WC1V 6SE (GB)**

(56) References cited:
**EP-A- 0 258 978**
**EP-A- 0 285 241**
**EP-A- 0 288 069**
**EP-A- 0 319 004**
**EP-A- 0 352 548**
**EP-A- 0 382 859**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

FIELD OF THE INVENTION

This invention relates to a magneto-optic medium capable of light-modulated direct overwriting, and apparatus for recording on and reproducing from such magneto-optic recording medium.

BACKGROUND OF THE INVENTION

First Prior Art Example

In Fig. 25, (a) is an oblique view of the main parts of a prior-art magneto-optic read-write device as shown, for example, in Preprints of the 34th Joint Congress of Applied Physics, Spring 1987, 28 P-Z L-3; (b) is a sectional view illustrating optical reading and writing of the recording medium; and (c) is a plot of the laser power variations for writing information in areas on the recording medium. In these drawings, 1 is a magneto-optic recording medium comprising a glass or plastic substrate 2, a first magnetic layer 3, and a second magnetic layer 4. An exchange coupling force acts between the first and second magnetic layers 3 and 4, tending to align their magnetization in the same direction. A laser beam LB is focused by an objective lens 5 onto a spot 6 on the information medium 1. The numeral 7 indicates areas in which the direction of magnetization in the first magnetic layer 3 is upward in Fig. 25 (b), this indicating the recording of binary "1" data. An initializing magnet 9 generates a magnetic field of substantially 5000 oersteds to initialize the second magnetic layer 4. A bias magnet 8 disposed facing the objective lens 5 with the information medium 1 in between generates a magnetic field of substantially 200 to 600 oersteds. In Fig. 25 (c) laser power is shown on the vertical axis and areas are indicated on the horizontal axis. The laser power is modulated to record the information "1" in the region R1 and the information "0" in the region R0. The dash-dot line in Fig. 25 (a) separates new data (DN) on the left from old data (D0) on the right.

The operation will be explained next. The recording medium 1 is rotated in the direction of the arrows in Fig. 25 (a) and (b) by a support and driving mechanism not shown in the drawing. The first magnetic layer 3 has the same properties as the recording layer in the media used in general magneto-optic disks comprising, for example, $Tb_{21}Fe_{79}$, and here too it functions as a reading and writing layer. The second magnetic layer 4, called the auxiliary layer, comprises $Gd_{24}Tb_3Fe_{73}$, for example, and provides the overwrite function, enabling new information to be written over old information in real time. The Curie temperatures Tc1 and Tc2 of the first and second magnetic layers 3 and 4, their room-temperature coercivities Hc1 and Hc2, and their room-temperature exchange coupling strengths Hw1 and Hw2 satisfy the following relations:

$$Tc1 < Tc2$$

$$Hc1 - Hw1 > Hc2 + Hw2$$

First the reading of information recorded in the first magnetic layer 3 (the recording layer) will be explained. As shown in Fig. 25 (b), the first magnetic layer 3 is magnetized in the up direction to represent a "1" and in the down direction to represent a "0." When this information is read, the first magnetic layer 3 is illuminated by the beam spot 6, and the magnetic orientation of the first magnetic layer 3 in the beam spot 6 is transformed by the well-known optical Kerr effect to optical information, in which form it is detected. Fig. 26 indicates the temperature changes in the magnetic layers in the spot caused by the laser beam power, with A corresponding to the intensity of the laser beam that illuminates the recording medium 1 during reading. At this intensity the maximum temperature increase in the first and second magnetic layers 3 and 4 in the beam spot 6 does not attain the Curie temperatures Tc1 and Tc2 of these layers, so the illumination in the beam spot does not erase the direction of magnetization; that is, it does not erase the recorded information.

Next the overwriting operation will be explained. The initializing magnet 9 in Fig. 25 generates a magnetic field of intensity Hini in the direction of the arrow b (up) in the drawing. This field Hini is related to the coercivity and exchange coupling strength of the first and second magnetic layers 3 and 4 as follows:

$$Hc1 - Hw1 > Hini > Hc2 + Hw2$$

As a result, when the information medium 1 revolves in the direction of the arrow a in Fig. 25 (b), those parts of the second magnetic layer 4 that pass over the initializing magnet 9 are uniformly magnetized in the up direction, regardless of the magnetic alignment of the first magnetic layer 3. The first magnetic layer 3 itself is not affected at room temperature by the magnetic field of the initializing magnet or by the exchange coupling force exerted by the second magnetic layer 4, so it remains in its previous state.

To write a "1," which means to magnetize the first magnetic layer 3 in the up direction, the laser beam is modulated to the intensity B in Fig. 26. The temperature in the beam spot 6 then rises above the Curie temperature Tc1 of the first magnetic layer 3, but does not reach the Curie temperature Tc2 of the second magnetic layer 4. Consequently, the first magnetic layer 3 loses its magnetization, while the second magnetic layer 4 retains the upward magnetic alignment given by the initializing magnet 9. As the disk turns and the area leaves the illumination of the beam spot 6, when the temperature of the first magnetic layer 3 falls below its Curie temperature Tc1, the magnetic alignment of the second magnetic layer 4 is transferred to the first magnetic layer 3, so that the first magnetic layer 3 becomes magnetized in the up direction, corresponding to a "1."

To record a "0," which means to magnetize the first magnetic layer 3 in the down direction, the laser beam is modulated to the intensity C in Fig. 26. The temperature in the beam spot 6 then rises above both the Curie temperature Tc1 of the first magnetic layer 3 and the Curie temperature Tc2 of the second magnetic layer 4. Consequently, the first and second magnetic layers 3 and 4 both lose their magnetization. As the disk turns and the area leaves the illumination of the beam spot 6, when the temperature of the second magnetic layer 4 falls below its Curie temperature Tc2, the second magnetic layer 4 is magnetized in the down direction by the weak magnetic field applied in the direction of the arrow c (down) in Fig. 25 by the bias magnet 9. Moreover, when the temperature of the first magnetic layer 3 falls below its Curie temperature Tc1, the magnetic alignment of the second magnetic layer 4 is transferred to the first magnetic layer 3, so that the first magnetic layer 3 becomes magnetized in the down direction, corresponding to a "0."

By the above overwriting operations, new information can he written over old information in real time by modulating the laser beam power between the values B and C in Fig. 26 according to the binary codes "0" and "1" of the new information.

Second Prior Art Example

Another example of prior art magneto-optic recording medium is shown in Fig. 27 and Fig. 28. This magneto-optic recording medium is described in Japanese Patent Application Kokai Publication No. 268103/1988, as an Embodiment 1 in this publication. This magnetic recording medium 101 comprises a first magnetic thin film 100, a second magnetic thin film 200, a third magnetic thin film 300, a fourth magnetic thin film 400, a transparent substrate 500, a dielectric film 600, and a protective film 700. Reference numeral 900 denotes an interface magnetic wall. The magnetic thin films 100 to 400 are formed of transition metal (TM) - rare earth metal (RE) alloy magnetic materials. With this medium, recording is made under application of an external magnetic filed Hex, by heating the medium either to a first temperature T1 not lower than Curie temperature Tc1 of the first magnetic thin film 100, or to a second temperature T2 at which the orientation of the sublattice magnetization of the second magnetic thin film 200 can he reversed. The first and the second magnetic thin films 100 and 200 are TM rich over the range of temperature from room temperature to their Curie temperatures. The third magnetic thin film 300 is RE-rich over the range of temperature from room temperature to the temperature T1. The Curie temperatures are related as follows:

$$Tc1 < Tc2 \qquad (0\text{-}1)$$

$$Tc4 < Tc2,\ Tc3 \qquad (0\text{-}2)$$

$$Tc4 \leq Tc1 \qquad (0\text{-}3)$$

At room temperature, the state of the magnetization is either in the state A or the state C. When the temperature is increased to T1, the first magnetic thin film 100 loses its magnetization (state E in Fig. 28). When the temperature falls below Tc1, the sublattice magnetisation orientation of the first magnetic thin film 100 is aligned with the sublattice magnetization orientation of the second magnetic thin film 200. When the temperature falls to room temperature, the state A is assumed. Thus, a section or bit cell in which "0" has been recorded is formed.

When the temperature is increased to T2, the first and the second magnetic thin films 100 and 200 lose their magnetization. The second magnetic thin film 200 will then be magnetized by the external magnetic field Hex, and hence its sublattice magnetization orientation is reversed (state F in Fig. 28). When the temperature falls to the vicinity of Tc1, the sublattice magnetization orientation of the first magnetic thin film 100 is aligned with the sublattice magnetization orientation of the second magnetic thin film 200. This transfer of the sublattice magnetization orientation is similar to that which takes place when the temperature is increased to Tc1. However, the sublattice magnetization orientation of the second magnetic thin film 200 is opposite and the transfer must take place by the exchange-coupling alone (without the aid of the external magnetic field). The following relation therefore must be satisfied.

$$\sigma\ w1 > 2 \cdot |Ms1| \cdot h1 \cdot Hex \qquad (0\text{-}5)$$

where h1 represents the thickness of the first magnetic thin film,

Msi represents the magnetization,
Hci represents the coercivity, and
σ w1 represents the energy density of the interface magnetic wall between the first and the second magnetic thin films.

The external magnetic field Hex cannot therefore made high. It is described in this publication that Hex is not more than about 1 kilo-oersteds. An interface magnetic wall 900 is created at the fourth magnetic thin film 400 because the sublattice magnetization orientations of the second and the third magnetic thin films 200 and 300 are opposite to each other (state G in Fig. 28). When the temperature falls further from this state G to room temperature TR, the state C is assumed provided that the following relationships are satisfied:

$$\sigma w2 - 2 \cdot Ms3 \cdot h3 \cdot Hex > 2 \cdot Ms3 \cdot h3 \cdot Hc3 \quad (0\text{-}11)$$

$$\sigma w2 - \sigma w1 - 2 \cdot Ms2 \cdot h2 \cdot Hex > 2 \cdot Ms2 \cdot h2 \cdot Hc2 \quad (0\text{-}12)$$

where $\sigma$ w2 represents the energy of the interface magnetic wall between the second and the third magnetic thin films 200 and 300. Thus, a section or bit cell in which "1" has been recorded is formed.

The above mentioned publication also shows another medium, as Embodiment 2, of which the process of magnetization is shown in Fig. 29. Fig. 30 is a temperature characteristics diagram of the magnetization and coercivity of the second magnetic thin film 200. In the Fig. 29, the arrows of the broken line denote RE sublattice magnetization. The magnetic thin films are composed as shown in Table 1.

TABLE 1

| Film | Composition | Curie Temp. (°C) | Magnetization (emu $cc^{-1}$) | Coercivity (kilo-oersteds) | Thickness (angstroms) |
|---|---|---|---|---|---|
| First | TbFeCo | 150 | 100 | 12 | 500 |
| Second | GdTbFeCo | 210 | 100 | 1 | 300 |
| Third | TbFeCo | 150 | 150 | 7 | 500 |
| Fourth | TbFe | 130 | - | - | 100 |

The second magnetic thin film 200 has the temperature characteristics of the magnetization and coercivity shown in Fig. 30. The external magnetic field Hex is so set as to satisfy

$$Hc2 < Hex$$

In the example described, the external magnetic field Hex is 1 kilo-oersteds. The recording operation is similar to that described above. But the initialization of the second magnetic thin film 200 is achieved by setting the external magnetic field to be higher than the coercivity of the second magnetic thin film 200 so as to satisfy the same condition as the recording medium shown in Fig. 28.

Third Prior Art Example

A further example of recording medium in the prior art is shown in Japanese Patent Application Kokai Publication No. 241051/1989. In this prior art, four magnetic layers are provided, and overwriting is achieved without resorting to the external magnetic field. The overwriting in the prior art is shown in Fig. 31. The fourth magnetic layer is premagnetized so that its sublattice magnetization orientation is upward, for example. At room temperature, the sublattice magnetization orientations of the second and the third magnetic layers are identical with the sublattice magnetization orientation of the fourth magnetic layer (Fig. 31 at (a)).

When the recording medium is heated above Tc1, the first magnetic layer loses its magnetization. When it cools below Tc1, the sublattice magnetization orientation of the first magnetic layer is aligned with the sublattice magnetization orientation of the second magnetic layer (Fig. 31 at (g)), and the first magnetic layer is magnetized upward (Fig. 31 at (f)). In this way, recording which results in upward sublattice magnetization orientation in the first magnetic layer is achieved.

When the recording medium is heated above TH, and close to Tc2, the first and the third magnetic layers lose their magnetization. The exchange-coupling from the fourth magnetic layer does not act on the second magnetic layer, and because of demagnetizing magnetic field, the second magnetic layer is magnetized so that its sublattice magnetization orientation is opposite to the sublattice magnetization orientation of the first magnetic layer (Fig. 31 at (e)). When the temperature is decreased below Tc1, the sublattice magnetization orientation of the first magnetic layer is aligned with the sublattice magnetization orientation of the second magnetic layer, to be downward (Fig. 31 at (i)). When the temperature is returned to room temperature, the sublattice magnetization orientation of the second magnetic layer is returned to the initial state (this process is called initialization) by exchange-coupling with the third magnetic layer (Fig. 31 at (h)). In this way, recording which results in the downward sublattice magnetization orientation in the first magnetic layer is achieved.

Problems Associated with the Prior Art Examples

The first-mentioned prior-art magneto-optic recording medium has a problem that an initializing magnet with a strong magnetic field is required and the overall structure of the read-write apparatus is complex and large in size.

A problem associated with the medium of Embodiment 1 of the Japanese Patent Application Kokai Publication No. 268103/1988 is that the external magnetic field Hex must be small so that the initialization of the second magnetic layer 200 is restrained, as will be seen from the condition (0-12) for the transition from the state G to the state C. However, if the external magnetic field Hex is set small, it is difficult to reverse the magnetization orientation of the second magnetic layer 200 into direction of the external magnetic field Hex when the medium is heated to T2 for High writing, and it may fail to realize the state F. Moreover, even if the conditions are so set as to satisfy the relationship (0-11), the sublattice magnetization orientation of the third magnetic thin film 300 may be reversed when the thermomagnetic recording medium 101 moves out of the region where the external magnetic field is applied, thereby causing failure in overwriting.

A problem associated with Embodiment 2 of the Japanese Patent Application Kokai Publication No. 268103/1988 is that the initialization of the second magnetic layer 200 utilizes the external magnetic field Hex so the external magnetic field Hex must be fairly large. Then, the transfer of the sublattice magnetization orientation of the second magnetic layer to the first magnetic layer 100 at about Tc1, i.e., the transition from the state F to the state G is difficult to occur, thereby causing failure in overwriting. Moreover, it is difficult to realize the second magnetic layer having the coercivity as set forth in Table 1, and even if it is realized, writing is difficult.

A problem associated with the medium described in Japanese Patent Application Kokai Publication No. 241051/1989 is that the writing into the second magnetic layer is made employing the compensation point recording system. Accordingly, the second magnetic layer must have a compensation temperature above room temperature and below the medium temperature during High writing. Although, stray magnetic fields do not cause a reaction, recording characteristics are poor. For instance, in digital recording, signals are not obtained at all, and overwriting was difficult. In addition, the exchange-coupling functions between the first magnetic layer and the second magnetic layer even below TL, and initialization of the second magnetic layer is not completely achieved, and overwriting may not be achieved. EP-A-0288069 describes a magneto-optic recording medium comprising a first magnetic layer having a perpendicular magnetic anisotropy, a second magnetic layer provided on said first magnetic layer and exchange coupled with said first magnetic layer, said second magnetic layer being a rare earth metal sublattice dominant film, a third magnetic layer provided on said second magnetic layer and exchange coupled with said second magnetic layer, and a fourth magnetic layer provided on said third magnetic layer and exchange coupled with said third magnetic layer, wherein the Curie temperature of said second magnetic layer is higher than the Curie temperature of said first magnetic layer, the Curie temperature of said second magnetic layer is higher than the Curie temperature of said third magnetic layer, the Curie temperature of said fourth magnetic layer is higher than the Curie temperature of said third magnetic layer, the magnetisation of said first magnetic layer is not reversed due to the reversal of the magnetisation of said second magnetic layer at room temperature and the directions of the sublattice magnetisation of said second magnetic layer, said third magnetic layer and said fourth magnetic layer are parallel with each other at room temperature after a recording operation.

EP-A-0288069 which is reflected in the preamble of claim 1 describes a thermomagnetic recording method using a thermomagnetic recording medium where first second and thin films each formed of rare-earth and transition metals are sequentially superposed to form layers in a magnetically coupled manner. The recording is carried out by heating the thermomagnetic recording medium under a predetermined magnetic field perpendicular to the firm plan thereof while selectively modulating in accordance with data to be recorded, a first heating state at a first temperature T1 substantially above the Curie point Tc1 of the first magnetic thin film and adequate to hold the sublattice magnetization of the transition metal of the second magnetic thin film in a predetermined direction, and a second heating state at a second temperature T2 substantially above the Curie point Tc1 and adequate to invert the sublattice magnetization of the transition metal of the second magnetic thin film to the reverse of the predetermined direction. In a cooling step subsequent to the first and second heating states, maintaining the sublattice magnetization of the third magnet thin film in a predetermined direction while orienting the sublattice magnetization of said second magnetic thin film to be directionally coincident with that of the third magnetic thin film at a temperature below the first temperature T1 without directionally inverting the sublattice magnetization of the first magnetic thin film.

EP-A-0382859 (a reference under Article 54(3) EPC) describes a multilayer magnetooptical recording medium which has a data-recording layer and in initializing layer, and which enables the light-modulated over-writing to be effected. The neighbouring layers are coupled together by an exchange force inclusive of an auxiliary layer that is provided to efficiently transfer the data from the initializing layer onto the data-recording layer. Using the thus constituted magnetooptical recording medium, its is allowed to overwrite the data maintaining a high density and at high speeds. Said EP-A-0 382 859 does not describe that the third magnetic layer has a perpendicular magnetic anizotropy.

EP-A-0352548 (a further reference under Article 54(3) EPC) describes as the basic structure of a thermomagnetic recording medium an arrangement consisting of a first and a second magnetic thin film having perpendicular anisotropy and a third magnetic think film having in-plane magnetic anisotropy or small perpendicular magnetic anisotropy interposed therebetween, formed into a laminated structure by being magnetically coupled to the adjoining films in turn, modulates and switches, in accordance with information to be recorded, a first heating condition and a second heating condition, with the medium applied with a predetermined external magnet field Hex in the direction perpendicular to the plane of the film, the first condition being that for raising termperature of the medium to a first temperature T1 which is virtually above the Curie termperature Tc1 of the first magnetic thin film and not causing reversal of the magnetic moment in the second magnetic thin film and the second condition being that for raising temperature of the same to a second temperature T2 which is virtually above the Curie temperature Tc1 and sufficient to cause reversal of the magnetic moment in the second magnetic thin film, to thereby form an information bit (magnetic domains) in the first magnetic thin film, and adapts during the course the medium is cooled from the heated states such that two states established by the different relationships between the directions of magnetization of the first and second magnetic thin films are finally formed whereby the recording of the information is performed. Said EP-A- 0 352 548 does not describe that the Curie temperature of the third magnetic layer is higher than the Curie temperature of the second magnetic layer.

## SUMMARY OF THE INVENTION

A magneto-optic recording medium made in accordance with the invention comprises a first magnetic layer having a perpendicular magnetic anisotropy, a second magnetic layer provided on said first magnetic layer and exchange coupled with said first magnetic layer, said second magnetic layer being a rare earth metal sublattice dominant film, a third magnetic layer provided on said second magnetic layer and exchange coupled with said second magnetic layer, and a fourth magnetic layer provided on said third magnetic layer and exchange coupled with said third magnetic layer, wherein the following relationships exist:

i) the Curie temperature of said second magnetic layer (TC2) is higher than the Curie temperature of said magnetic layer (TC1);
ii) the Curie temperature of said second magnetic layer (TC2) is higher than the Curie temperature of said third magnetic layer (TC3);
iii) the Curie temperature of said fourth magnetic layer (TC4) is higher than the Curie temerature of said third magnetic layer (TC3);
iv) the magnetisation of said first magnetic layer is not reversed due to the reversal of the magnetisation of said second magnetic layer at room temperature; and
v) the directions of the sublattice magnetisation of said second magnetic layer, said third magnetic layer and said fourth magnetic layer are parallel with each other at room temperature after a recording operation; characterised in that
vi) the Curie temperature of said fourth magnetic layer (TC4) is higher than the Curie temperature of said first magnetic layer (TC1),
vii) the Curie temperature of said fourth magnetic layer (TC4) is greater than the Curie temperature of said second magnetic layer (TC2),
viii) there is a temperature between room temperature and the lower one of the Curie temperature of said first magnetic layer (TC1) and the Curie temperature of said third magnetic layer (TC3) at which the relationships

$Hc2 < Hw2$ at about Tc3 or below; and

$Hw3 > Hc3$ at about Tc3 or below and at or above room temperature are satisfied, and

ix) the third magnetic layer has a perpendicular magnetic anisotropy
where

Hc2 is the coercivity of said second magnetic layer that is obtained when said four layers are stacked with one another and the sublattice magnetisations of said first magnetic layer and said third magnetic layer are not parallel, and
Hw2 is the exchange coupling which said second magnetic layer recieves from said first magnetic layer and said third magnetic layer when said four layers are stacked with each other and the sublattice magnetizations of said first magnetic layer and said third magnetic layer are not parallel with each other.

The thickness of said first magnetic layer may preferably be not less than 200 angstroms and not more than 1200 angstroms.

The thickness of said second magnetic layer may preferably be greater than the thickness of said first magnetic layer.

The second layer may contain iron and cobalt and the ratio of cobalt to the sum of iron and cobalt may preferably be smaller than 0.5.

The second magnetic layer may be an amorphous magnetic film of a transition metal and a rare-earth metal containing gadolinium (Gd) and dysprosium (Dy).

The third magnetic layer may be a transition metal sublattice dominant film.

The third magnetic layer may be an amorphous magnetic film consisting of a rare-earth metal and a transition metal, wherein the transition metal has a composition $Fe_{1-x} Co_x$, with $0 \leq x \leq 0.3$.

The third magnetic layer may have a thickness which is greater than 100 angstroms and smaller than 800 angstroms.

The fourth magnetic layer may contain iron and cobalt, and the ratio of cobalt to the sum of iron and cobalt may preferably be larger than 0.5.

The third magnetic layer and said fourth magnetic layer may contain terbium (Tb).

A magneto-optic recording and reproducing apparatus according to the invention is for recording information on a recording layer of a magneto-optic recording medium in the form a bit having an upward magnetization and a bit having a downward magnetization, and comprises the magneto-optic recording medium as recited above. It comprises:

means for irradiating a laser beam on the medium,
means for heating said magneto-optic recording medium to two or more values in accordance with the binary information to be recorded, and
means for applying a recording magnetic field to the part of the medium where said beam is irradiated.

In the apparatus, a reproducing laser beam may be provided in the proximity of the recording laser beam.

The recording laser beam and the reproducing laser beam may have different wavelengths.

BRIEF DESCRIPTION OF THE DRAWINGS

Fig. 1 shows a magneto-optic disk of an embodiment of the invention.

Fig. 2 to Fig. 4 are schematic diagrams showing the process of initialization of the magneto-optic disk of this invention.

Fig. 5 explains recording operation with a low temperature.

Fig. 6 explains recording operation with a high temperature.

Fig. 7A is a schematic diagram showing the magnetization curves in the case of room temperature.

Fig. 7B shows the n-loop in solid line and the c-loop in dotted line.

Fig. 7C shows the c-loop in solid line and the n-loop in dotted line.

Fig. 7D shows the magnetization curve in the case of temperature in the vicinity of Tc3.

Fig. 8 explains magnetic reversal.

Fig. 9 shows the relationship between the film thickness of the first magnetic layer and the CN ratio.

Fig. 10 shows the relationship between the film thickness of the second magnetic layer and the erasability.

Fig. 11 shows the composition ratio of iron and cobalt in the second magnetic layer, and the erasability.

Fig. 12 shows the composition ratio of iron and cobalt in the third magnetic layer, and the erasability.

Fig. 13 shows the composition ratio of iron and cobalt in the fourth magnetic layer, and the erasability.

Fig. 14 shows the relationship between the number of repeated overwriting operations and the reduction of the CN as compared with the initial value.

Fig. 15 shows the hysteresis loop of the magneto-optic recording medium according to the invention.

Fig. 16 shows the characteristics of the first magnetic layer necessary to have a minimum bit diameter of 500 angstroms.

Fig. 17 shows the relationship between the Curie temperature of the first magnetic layer and the C/N.

Fig. 18 shows the relationship between the film thickness of the second magnetic layer and the CN ratio.

Fig. 19 is a schematic diagram showing the magnetization curves at room temperature.

Fig. 20 to Fig. 24 show magneto-optic disk device employing the magneto-optic disk medium of Fig. 1.

Fig. 25 shows a magneto-optic recording and reproducing device in the prior art.

Fig. 26 shows the variation in the temperature in the magnetic film due to the laser beam power.

Fig. 27 shows another medium in the prior art.

Fig. 28 and Fig. 29 show transition between states of the medium in the prior art.

Fig. 30 shows the temperature characteristics of the magnetization and the coercivity of the second layer of the prior art medium, and

Fig. 31 shows the overwriting in the prior art

DETAILED DESCRIPTION OF THE PREFERRED EMBODIMENTS

Embodiments of the invention will now be described.

Embodiment 1

Fig. 1 shows a structure of a magneto-optic recording medium of an embodiment of the invention.

This recording medium comprises the following layers:

| | | |
|---|---|---|
| Dielectric layer : | $SiN_x$ | 650 angstroms |
| First magnetic layer : | $Tb_{22}Fe_{69}Co_9$ | 800 angstroms |
| Second magnetic layer : | $Gd_8Dy_{17}Fe_{60}Co_{15}$ | 1500 angstroms |
| Third magnetic layer : | $Tb_{16}Fe_{84}$ | 200 angstroms |
| Fourth magnetic layer : | $Tb_{30}Co_{70}$ | 400 angstroms |
| Protective layer : | $SiN_x$ | 700 angstroms |

These layers are formed on a glass substrate by sputtering or the like.

More specifically, four-element RF magnetron sputtering apparatus is used, and an Fe target on which Tb and Co chips are disposed, an Fe target on which Gd, Dy and Co chips are disposed, an Fe target on which Tb chips are disposed, and a Co target on which Tb chips are disposed are placed in the apparatus. A glass substrate with a thickness of 1.2 mm, with a diameter of 86 mm, and with grooves of pitch of 1.6 µm having been provided in advance are set in a chamber of the apparatus.

The chamber is evacuated to $8x10^{-7}$ Torr or a lower pressure, and Ar gas is then introduced to 3 mTorr. The sputtering was conducted at a rate of 100 angstroms/minute. In this way, a first magnetic layer of TbFeCo of 800 angstroms thick is formed. Then, with the evacuated state being maintained, a second magnetic layer of GdDyFeCo of 1500 angstroms thick, a third magnetic layer of TbFe of 100 angstroms thick, and a fourth magnetic layer of TbCo of 400 angstroms thick are formed. Each of the magnetic layers is a perpendicularly magnetized film, and the magnetic layers adjacent each other are exchange-coupled.

The first magnetic layer is a recording layer for recording information. The second magnetic layer, and the third magnetic layer do not record information in itself, but behave differently during High writing and Low writing, such that data "0" or "1" is written after the writing.

The fourth magnetic layer is an initializing layer whose sublattice magnetization is not reversed during High or Low writing. The third magnetic layer is a buffer layer for intercepting the exchange-coupling between the second magnetic layer and the fourth magnetic layer.

The operation will now be described.

[0] Initialization Process (Magnetization of the Layers at the end of Fabrication)

When the layers comprising the magneto-optical recording medium have been deposited, the medium is magnetized so that the transition metal sublattice magnetizations of the second magnetic layer, the third magnetic layer and the fourth magnetic layer of the recording medium are oriented downward, and that the combination of the four layers assume either of the two states out of the possible $2^4$ states. These two states are the states in which information "1" or "0" is recorded. In Fig. 2, the blanked arrow indicates the net magnetization, and the solid line arrow indicates the transition metal sublattice magnetization, the broken line indicates presence of an interface magnetic wall between magnetic layers, and a horizontal bar indicates the state in which ferromagnetic property is lost because of a temperature rise above the Curie temperature.

As shown in Fig. 3, to orient the transition metal sublattice magnetization of the fourth magnetic layer downward, the medium is exposed to a magnetic field greater than the reversal magnetic field of the fourth magnetic layer. When the reversal magnetic field is substantially large and the magnetization of the fourth magnetic layer is difficult, the recording medium may be heated or cooled to facilitate the magnetization.

When the fourth magnetic layer is formed of a material which is TM-rich at room temperature, the medium is exposed to a downward magnetic field. When the fourth magnetic layer is formed of a material which is RE-rich at room temperature, the medium is exposed to an upward magnetic field greater than the reversal magnetic field.

Where the layers are heated above the Curie temperature of the third magnetic layer even in the case of Low writing, the third magnetic layer may be initialized to be anti-parallel with the second and fourth magnetic layers. Even so, the third magnetic layer will be magnetized to assume the state shown in Fig. 2 when either of Low writing and High writing is conducted once.

The sublattice magnetization orientation of the second magnetic layer should be the same as the sublattice magnetization orientation of the fourth magnetic layer before the recording. If the two layers are both TM rich or both RE rich, the magnetization (for initialization at the end of the fabrication) can be achieved by placing the medium in a magnetic field only once, so the magnetization is easy. Accordingly, the two layers should be both TM rich or both RE rich at room temperature. Where one of the second magnetic layer and the fourth magnetic layer is TM rich and the other of them is RE rich, the initial magnetization can achieved by placing the medium in a first magnetic field greater than the reversal field of the fourth magnetic layer and then placing a second magnetic field which is of the opposite direction and which is smaller than the reversal field of the fourth magnetic layer and greater than the reversal field of the second magnetic layer.

Reading

The operation during reading is similar to the operation described with reference to Fig. 25B. That is, for the reading of information recorded in the recording layer, the recording layer is illuminated with a beam spot, and the magnetic orientation of the recording layer in the beam spot is transformed by the well-known Poler-Kerr effect to optical information, which in turn is converted to electrical signals.

Recording

[Low Writing]

As shown in Fig. 5, the laser beam output is higher than in reading, and the magnetic layers within the focused spot is heated to the vicinity of the Curie temperature Tc1 of the first magnetic layer, while the sublattice magnetization orientation of the second magnetic layer is not altered, and the sublattice magnetization orientation of the second magnetic layer is transferred to the first magnetic layer and the sublattice magnetization orientation of the first magnetic layer will therefore become downward.

At this time, there is no substantial contribution of the third magnetic layer and the fourth magnetic layer to the writing. Even if the magnetization of the third magnetic layer is lost once, the sublattice magnetization orientation of the fourth magnetic layer is thereafter transferred by exchange-coupling. As a result, the state "0" shown in Fig. 5 results.

Where the magnetization of the third magnetic layer is anti-parallel with the magnetization of the second magnetic layer and the fourth magnetic layer, if the layers are heated above the Curie temperature of the third magnetic layer, the magnetization of the third magnetic layer is lost during recording, so the magnetic state of the third magnetic layer just after the initialization at the end of the fabrication does not matter. This is because after the recording process is experienced once, the third magnetic layer will assume the initial state "0".

If the second magnetic layer is formed of a magnetic material having a compensation temperature lower than its Curie temperature, the direction of the bias magnetic field and the net magnetization orientation (assuming that the fourth magnetic layer is RE-rich) of the fourth magnetic layer are the same (the bias magnetic field and the TM sublattice magnetization orientation are opposite) at room temperature. If the second magnetic layer is formed of a magnetic material which does not have a compensation temperature below its Curie temperature, the direction of the bias magnetic field and the net magnetization orientation of the fourth magnetic layer are opposite (the bias magnetic field and the TM sublattice magnetization orientation are the same) at room temperature. As will be described, it has been found preferable that the second magnetic layer is formed of a magnetic material having a compensation temperature lower than its Curie temperature, and the direction of the bias magnetic field and the magnetization of the fourth magnetic layer are the same at room temperature.

[High Writing]

As shown in Fig. 6, when the layers are heated to the vicinity of the Curie temperature Tc2 of the second magnetic layer, the magnetization of the first and the third magnetic layers is lost, but the RE sublattice magnetization of the fourth magnetic layer is not altered. The TM sublattice magnetization orientation of the second magnetic layer is turned upward due the bias magnetic field, without receiving the exchange-coupling from the first magnetic layer and the third magnetic layer.

When the layers are cooled below the Curie temperature Tc1 of the first magnetic layer, the magnetization of the second magnetic layer is transferred to the first magnetic layer, so its TM sublattice magnetization orientation is turned upward.

When the layers are cooled below the Curie temperature Tc3 of the third magnetic layer, the sublattice magnetization orientation of the third magnetic layer is aligned with the sublattice magnetization orientation of the fourth magnetic layer and becomes downward. When the temperature lowers further, the sublattice magnetization orientation of the second magnetic layer is aligned with the sublattice magnetization orientation of the fourth magnetic layer through the third magnetic layer and its TM sublattice magnetization orientation is turned downward to assume the initial state "1".

The fourth magnetic layer should have a high coercivity even in the vicinity of Tc2 so that reversal of magnetization will not take place even during High writing. To fulfill this requirement, the fourth magnetic layer may be formed of such a RE-rich material having a compensation temperature in the vicinity of Tc2. This is because at or near the compensation temperature, the coercivity is very high.

It is preferable that the coercivity of the second magnetic layer be small below Tc3 where the initialization takes place. In addition, it is preferable that the second magnetic layer is RE-rich below Tc3 at which the initialization occurs. This is because the condition to be satisfied is:

$$Hc < Hw2 + Hex$$

where the second magnetic layer is RE-rich, while the condition to be satisfied is:

$$Hc < Hw2 - Hex$$

where the second magnetic layer is TM-rich.

Fig. 7A shows a magnetization curve at room temperature. To facilitate the observation of the magnetization curves, Fig. 7B shows the n-loop in solid line and the c-loop in dotted line, while Fig. 7C shows the c-loop in solid line and the n-loop in dotted line. Fig. 7D shows a magnetization curve in the vicinity of Tc3.

During cooling in High writing, when the temperature falls below Tc3, the sublattice magnetization orientation of the second magnetic layer must be altered from the state "1′" to the state "1". The magnetization reversal at this time takes place where the reversal magnetic fields of the two magnetization curves (n-loop and c-loop), which relate only to the second magnetic layer, are on the same side of the bias magnetic field which is negligibly small in the scale of Fig. 7 or is substantially zero. At room temperature, c-loop is extended on both sides of the zero, while at Tc3 the c-loop is on one side of the zero, as shown in Fig. 7D and transition of the state from "1′" to "1" takes place.

It has been found that the coercivity of the second magnetic layer in the layered structure during initialization is smaller than the coercivity of the second magnetic layer when it is by itself (not in stack or superimposed with other layers). Since it is preferable for the initialization that the coercivity of the second magnetic layer be smaller, this phenomenon facilitates the initialization.

Let Tci be the Curie temperature of the i-th magnetic layer,

Hci be half the difference between the reversal magnetic fields (corresponding to the coercivity) of the i-th magnetic layer, and
Hwi be the exchange-coupling from the neighboring magnetic layers (which equals the distance from zero applied magnetic field to the midpoint of the reversal magnetic fields: For the second magnetic layer and the third magnetic layer, it is defined as the difference between the magnetic fields required to cause the magnetization reversals shown in Fig. 8.)

The magnetic characteristics of this embodiment is described as follows:

$$Tc4 > Tcomp4 > Tc2 > Tc1 > Tcomp2 > Tc3 > \text{room temperature} \quad (1)$$

With respect to the first magnetic layer:

$$Hw1 < Hc1 \quad \text{at about room temperature,} \quad (2)$$

$$Hw1 > Hc1 \quad \text{at about Tc1} \quad (3)$$

With respect to the second magnetic layer:

$$Hw2 > Hc2 \quad \text{at about Tc3 or below} \quad (4)$$

$$Hw2 < Hc2 \quad \text{at about Tc1} \quad (5)$$

With respect to the third magnetic layer:

$$Hw3 > Hc3 \quad \text{at about Tc3 or below and at or above room temperature} \quad (6)$$

With respect to the fourth magnetic layer:

$$Hw4 < Hc4 \quad \text{within all the operating temperature range} \quad (7)$$

The condition (2) is a requirement that the magnetization of the first magnetic layer is not reversed because of the reversal of the magnetization of the second magnetic layer at room temperature. The conditions (4), (6) to (7) indicate that the magnetizations of the second magnetic layer, the third magnetic layer and the fourth magnetic layer are all downward.

With the operations described above, direct overwriting is achieved by modulating the laser beam strength. A magneto-optic recording medium with a substrate having grooves at 1.6 μ m intervals and having the above dielectric layer, magnetic layers and protective layer provided thereon was tested by writing signals with a bit length of 0.76 μ m over signals with a bit length of 2 μ m at a linear velocity of 11 m/sec., an applied magnetic field 350 oersteds and the laser beam power of 13 mW for the peak power and 5 mW for the bottom power. As a result, no unerased signals were observed, and the CN ratio of 47 dB was obtained.

The composition and the thickness of each magnetic layer in the above embodiment are determined to improve the overwritability, although overwriting is achieved if the Curie temperature and the coercivity of each layer are defined properly. It has been found that the following factors are important in improving the characteristics.

(1) The thickness t1 of the first magnetic layer.

Various recording media having the same configuration as that of the Embodiment 1 above except for the thickness of the first magnetic layer were formed with the thickness of the first magnetic layer being varied. The CN ratio was measured after writing signals with the bit length of 0.76 $\mu$ m over signals with the bit length of 2 $\mu$ m at a linear speed of 11 m/sec., an applied magnetic field of 300 oersteds, and the results were as shown in Fig. 9.

It is seen that the range of thickness over which the CN ratio is more than 42dB is between 200 angstroms and 1200 angstroms. The laser beam penetrates to the depth of about 200 angstroms or more so when the thickness is below 200 angstroms, the laser beams reaches the surface of the second magnetic layer. When the thickness is above 1200 angstroms, the upper limit of the permissible bias magnetic field range is small.

(2) The thickness t1 of the first magnetic layer should be smaller than the thickness t2 of the second magnetic layer.

In Table 1 of the Embodiment 2 of Japanese Patent Application Kokai Publication No. 268103/1988, an example is shown in which the first magnetic layer is 500 angstroms thick and the second magnetic layer is 300 angstroms thick to enable initialization at room temperature. In the invention, the exchange-coupling from the fourth magnetic layer to the second magnetic layer is interrupted by the third magnetic layer and does not act above the Curie temperature Tc3 of third magnetic layer. Accordingly, the magnetization of the first magnetic layer is aligned with the magnetization of the second magnetic layer both during Low writing and High writing. It is therefore necessary that the following relationship be satisfied.
With respect to the first magnetic layer:

$$Hw1 > Hc \quad \text{at about } Tc1 \tag{3}$$

With respect to the second magnetic layer:

$$Hw2 > Hc2 \quad \text{at about } Tc1 \tag{5}$$

Because the exchange-coupling acting on each layer is inversely proportional to the thickness, it is preferable that the first magnetic layer is thin and the second magnetic layer is thick. To ensure that the magnetization of the first magnetic layer is aligned with the magnetization of the second magnetic layer during the above operation, the second magnetic layer should preferably be thicker than the first magnetic layer. Fig. 10 shows the results of measurements of the erasability for varying thicknesses of the first magnetic layer and the second magnetic layer. When the thickness t1 of the first magnetic layer is varied to 600, 800 and 1000 angstroms, the erasability of more than 30 dB was obtained when the thickness t2 of the second magnetic layer is greater than the thickness t1 of the first magnetic layer. When the thickness t1 of the first magnetic layer is further reduced to 400 angstroms, t2 must be not smaller than 600 angstroms to obtain the erasability of more than 30 dB.

When an intermediate layer (a magnetic layer or a dielectric layer of 50 angstroms thick) for controlling the exchange-coupling is provided, the thickness of the second magnetic layer may be about the same as or smaller than the thickness of the first magnetic layer.

(3) For the second magnetic layer: Co/(Fe + Co) < 0.5.

In the configuration set forth below:

| | | |
|---|---|---|
| Dielectric layer : | $SiN_x$ | 650 angstroms |
| First magnetic layer : | $Tb_{22}Fe_{69}Co_9$ | 800 angstroms |
| Second magnetic layer : | $Gd_\beta Dy_{25-\beta} (Fe_{1-\alpha} Co_\alpha)_{75}$ ($\beta$ = 8 or 15) | 1500 angstroms |
| Third magnetic layer : | $Tb_{18}Fe_{84}$ | 200 angstroms |
| Fourth magnetic layer : | $Tb_{30}Co_{70}$ | 400 angstroms |
| Protective layer : | $SiN_x$ | 700 angstroms |

the relationship between $\alpha$ and the erasability is as shown in Fig. 11. When the Co content is increased the perpendicular magnetic anisotropy of the second magnetic layer is increased and the initialization of the second magnetic layer becomes difficult, so the erasability is degraded. When Gd content is increased, the perpendicular magnetic anisotropy is decreased, and the Co content can therefore be increased. However, as shown in Fig. 11, for $\alpha = 0.5$, it is difficult to obtain the erasability which is acceptable for practical application.

(4) RE-TM amorphous magnetic film containing Gd and Dy should be used for the second magnetic layer.

As described earlier, ferrimagnetic amorphous alloys containing rare-earth metal (RE) and transition metal (TM) are generally employed in the magneto-optical recording film. For the rare-earth metal, Tb, Gd, Dy and the like are often employed. It has been found that a recording film in which Gd and Dy are major components of RE is most suitable for the second magnetic layer. This is for the following reason.

(i) Initialization of the second magnetic layer takes place at about 100°C. Accordingly, the perpendicular magnetic anisotropy coefficient Ku2 of the second magnetic layer should be low at that temperature. A magnetic layer containing Gd and Dy has a lower perpendicular magnetic anisotropy coefficient than a magnetic layer containing Tb.

(ii) Gd has a high Curie temperature, whereas Dy has a low Curie temperature. It is therefore possible that, by varying the proportion of Gd and Dy, the temperature dependence of the magnetic characteristics can be controlled over a wide range. Because the second magnetic layer has various functions at respective temperatures, the controllability of the temperature dependence of the magnetic characteristic is important.

(5) The third magnetic layer has perpendicular magnetic anisotropy.

The exchange-coupling Hw to the neighboring layer is correlated with the perpendicular magnetic anisotropy Ku. That is, the exchange-coupling is proportional to the interface wall energy σ w, and Ku and σ w are related as follows:

$$\sigma w \propto \sqrt{Ku}$$

The exchange-coupling is given from the saturation magnetization Ms and the film thickness as follow:

$$Hw = \sigma w/(2 \cdot Ms \cdot t)$$

Accordingly, when a film with an in-plane easy axis is employed as the third magnetic layer, σ w is lowered and the exchange-coupling Hw2 and Hw3 from the fourth magnetic layer to the second magnetic layer are reduced, so it becomes difficult to satisfy the following relationships:

For the second magnetic layer:

$$Hw2 > Hc2 \text{ at about Tc3 or below} \qquad (4)$$

For the third magnetic layer:

$$Hw3 > Hc3 \text{ at about Tc3 or below and at or above room temperature} \qquad (6)$$

For this reason, a magnetic film having a perpendicular magnetic anisotropy for the third magnetic layer is employed.

(6) The third magnetic layer should be TM rich.

To satisfy the relationship:

$$Hw3 > Hc3 \qquad (6)$$

at or below the Curie temperature Tc3 of the third magnetic layer, the third magnetic layer should preferably be formed of an RE-TM film which does not have the compensation temperature above room temperature. That is, the exchange-coupling acting on the third magnetic layer is given by:

$$Hw3 = (-\sigma w23 + \sigma w34)/(2 \cdot Ms3 \cdot t3)$$

where Ms3 represents the saturation magnetization,

t3 represents the thickness, and
σ w23 and σ w34 represent the magnetic wall energies of the interfaces with the second magnetic layer and the fourth magnetic layer, respectively.

In the vicinity of the compensation temperature, the coercivity Hc3 is increased and equation (6) is therefore not satisfied. For this reason, the third magnetic layers should preferably be formed of a TM-rich RE-TM film which does not have a compensation temperature above room temperature.

There are RE-TM alloy films which are RE-rich and do not have a compensation temperature above room temperature temperature. However, compared with TM-rich RE-TM films, these films have smaller interface magnetic wall energy and hence smaller perpendicular magnetic anisotropy, so exchange-coupling is small and the characteristics are poor. Accordingly, it is preferable that the third magnetic layer be formed of a TM-rich RE-TM alloy film.

The range of composition which satisfies the characteristics required of the third magnetic layer, i.e., the perpendicular magnetic anisotropy and TM-rich property is wide, so meeting this requirement in production is not difficult.

(7) When the third magnetic layer is formed of RE ($Fe_{1-x}Co_x$), x should be within the range of from 0 to 0.3, i.e., $0 \leq x \leq 0.3$.

Erasability of the magneto-optic recording medium of the Embodiment 1 is shown in Fig. 12 with varying Co content x (= Co/FeCo, i.e., the Co content in the transition metal (ratio of Co content to the total amount of Co and Fe) of the third magnetic layer. From the figure, it is seen that erasability of 30 dB or more is obtained when $x \leq 0.3$. It is therefore preferable that the following relationship:

$$0 \leq x \leq 0.3$$

is satisfied if the third magnetic layer contains

$$RE\ (Fe_{1-x}Co_x).$$

(8) The thickness t3 of the third magnetic layer should be between 100 angstroms and 800 angstroms.

The thickness t3 of the third magnetic layer should be not less than 100 angstroms to adequately interrupt the exchange-coupling from the fourth magnetic layer to the second magnetic layer during High writing, to ensure a good overwriting. This is the thickness with which the film is present not at isolated islands or as a mesh-like structure, but as a continuous layer. When the thickness of the third magnetic layer was varied in the Embodiment 3 which will later be described, the overwriting was confirmed up to 800 angstroms. When the thickness exceeds 800 angstroms, Hw3 may become smaller than Hc3, and initialization is interfered.

(9) With respect to the fourth magnetic layer Co/(Fe + Co) > 50 at %.

Recording media having the same configuration as the recording medium of Embodiment 1 except for the composition of the fourth magnetic layer were prepared. Erasability with varying composition of the fourth magnetic layer is shown in Fig. 13. When Co/(Fe+Co) is smaller than 50 at %, the erasability was poor and overwriting is impossible. Co content should therefore be greater than 50 at %.

(10) The thickness of the fourth magnetic layer

Recording media having the same configuration as the recording medium of Embodiment 1 except for the thickness of the fourth magnetic layer were prepared, with the thickness of the fourth magnetic layer being varied. Repeated overwriting was conducted with each cycle consisting of overwriting signals with a bit length of 0.76 μ m over signals with a bit length of 2 μ m (and writing signals with a bit length of 2.0 μ m over the signals with a bit length of 0.76 μ m. The results are shown in Fig. 14. If the time over which the CN ratio falls 3 dB from the initial CN ratio is defined as the lifetime, it is seen from Fig. 14 that the thickness of the fourth magnetic layer should be not less than 200 angstroms to obtain the lifetime of more than $10^5$ repeated overwriting cycles. To obtain the lifetime of more than $10^6$ repeated overwriting cycles, the thickness of the fourth magnetic layer should be not less than 400 angstroms.

(11) Rare-earth metal of the RE-TM alloy films used for the third magnetic layer and the fourth magnetic layer should contain Tb.

The third magnetic layer and the fourth magnetic layer should have a large exchange-coupling between the layers in order to ensure initialization for aligning the orientation after each writing operation. The exchange-coupling Hw is given by:

$$Hw = \sigma w/(2 \cdot Ms \cdot t)$$

where Ms represents saturation magnetization,

t represents the thickness, and
σ w represents interface magnetic wall energy.

The interface magnetic wall energy σ w and the perpendicular magnetic anisotropy Ku are related as follows:

$$\sigma w \propto \sqrt{Ku}$$

To obtain a larger exchange-coupling Hw, a material having a greater perpendicular magnetic anisotropy should be employed. RE-TM alloy films employing Tb as the rare-earth metal of the magnetic layer are known to have a greater perpendicular magnetic anisotropy. To obtain a good overwriting characteristics, the third magnetic layer and the fourth magnetic layer should contain Tb. TbFeCo is suitable for the third magnetic layer. On the other hand, TbCo is suitable for the fourth magnetic layer. This is because, for the fourth magnetic layer, it is important that the sublattice magnetization orientation is unchanged at any temperature within the range of operating temperature, and for this purpose a great perpendicular magnetic anisotropy and a high Curie temperature are necessary. It is also possible to add a small amount of one or more of Eu, Gd, Dy, and Ho.

Japanese Patent Application Kokai Publication shows, at its Embodiment 2, TbFeCo having a Curie temperature of 150° C being employed for the third magnetic layer (bottom, initializing layer which corresponds to the fourth magnetic layer of the invention) whose orientation of the sublattice magnetization is unchanged. The temperature at which the magnetization of the second magnetic layer is reversed (the second temperature T2, which corresponds to the High writing temperature in the description of the embodiment in this specification) is stated to be 250° C. However, with such a temperature, the third magnetic layer is at above its Curie temperature, so its magnetization is reversed because of the biasing magnetic field.

For this reason, to maintain the orientation of the sublattice magnetization, the Curie temperature should be high. TbCo has a high Curie temperature as well has a high anisotropy.

(12) Condition for achieving the minimum bit diameter of 500 angstroms

The relationship between Hc1 of the first magnetic layer and the shift Hw1 (in the reversal magnetic field due to exchange coupling), and the minimum bit diameter were studied. Hc1 and Hw1 of the first magnetic layer were measured from the hysteresis loops due to Poler-Kerr effects. Fig. 15 shows an example thereof. The minimum bit diameter was determined by observation of the demagnetized state by use of a polarizing microscope. The results were shown in Fig. 16. In order for the minimum bit diameter of 500 angstroms to be present, it is necessary that:

$Hc1 \geq 1$ kilo-oersteds, and
$Hw1 \geq 0.3$ kilo-oersteds.

(13) The relationship between the Curie temperature of the first magnetic layer and the CN ratio

Recording media having the same configuration as the Embodiment 1 except for the first magnetic layer were prepared, with the Curie temperature of the first magnetic layer being varied by varying the composition. The relationship between the Curie temperature of the first magnetic layer and the CN ratio with the bit length of 0.76 $\mu$ m is shown in Fig. 17. To obtain the CN ratio of not less than 42 dB, the Curie temperature of the first magnetic layer should be not lower than 150° C. When the CN ratio is not less than 42 dB jitter is 5 nsec. or shorter and errors are reduced.

When one or more the conditions (1) to (13) are satisfied, the overwriting characteristics are improved. The Embodiments 2 to 9 which are described later satisfy some of the above conditions.

In the Embodiment 1, the condition for the initialization of the second magnetic layer shown in relationship (4), i.e.,

$$Hw2 > Hc2$$

is satisfied at about Tc3 and not at room temperature.

However, in some embodiments, the relationship (4) is satisfied at room temperature. For instance, the following two examples satisfy the relationship (4) at room temperature.

(a)

| | |
|---|---|
| $SiN_x$ | 650 angstroms |
| $Tb_{22}Fe_{69}Co_9$ | 800 angstroms |
| $Gd_8Dy_{17}Fe_{60}Co_{15}$ | 800 angstroms |
| $Tb_{16}Fe_{84}$ | 200 angstroms |
| $Tb_{30}Co_{70}$ | 400 angstroms |
| $SiN_x$ | 700 angstroms |

(b)

| | |
|---|---|
| $SiN_x$ | 650 angstroms |
| $Gd_{10}Tb_{12}Fe_{69}Co_9$ | 800 angstroms |
| $Gd_8Dy_{17}Fe_{60}Co_{15}$ | 1500 angstroms |
| $Tb_{16}Fe_{84}$ | 200 angstroms |
| $Tb_{30}Co_{70}$ | 400 angstroms |
| $SiN_x$ | 700 angstroms |

The results of the experiments are shown below.

| Embodiment | Peak power (mW) | Bottom power (mW) | Bias field (oersteds) | CN ratio |
|---|---|---|---|---|
| 1 | 13.0 | 5.0 | 300 ± 150 | 47.0 |
| (a) | 11.5 | 4.5 | 200 ± 50 | 40.8 |
| (b) | 13.5 | 8.0 | 250 ± 100 | 41.3 |

It is seen from the above, that compared with the Embodiment 1, the CN ratios of (a) and (b) are lower, and the bias magnetic field margin of (a) and (b) is smaller.

With the example (a), the thickness of the second magnetic layer is reduced (from 1500 angstroms to 800 angstroms) so the relationship (4) is satisfied at room temperature. However, because of the reduced thickness of the second magnetic layer, the transfer process from the second magnetic layer to the first magnetic layer is unstable, and the CN ratio is therefore degraded and the bias magnetic field margin is reduced.

With the example (b), Gd is added to the first magnetic layer to reduce σ w12, so that the relationship (4) is satisfied at room temperature but because of the increase of the Curie temperature of the first magnetic layer, the bottom power is increased and the separation between the bottom power and the peak power is not good and the CN ratio is thereby lowered.

As has been made clear, it has been observed that when the medium is designed to satisfy the relationship (4) at room temperature, there will be adverse effects on other process and recording and reproducing characteristics are degraded.

For this reason, experiments were made to determine the thickness of the second magnetic layer at which the CN ratio drops. In addition, the lowest temperature at which the relation (4) is satisfied was measured for each thickness by use of a vibrating sample magnetometer. The results are shown in Fig. 18.

It is seen from these data that where the minimum temperature at which the relation (4) is satisfied is 70°C, the CN ratio is rapidly lowered. It is seen that the CN ratio is good when the temperature at which the relation (4) is satisfied is a little above room temperature, i.e., about 70° C or higher.

<u>Embodiment 2</u>

A recording medium of this embodiment has the following configuration:

| | | |
|---|---|---|
| Dielectric layer : | $SiN_x$ | 650 angstroms |
| First magnetic layer : | $Tb_{22}Fe_{69}Co_9$ | 800 angstroms |
| Second magnetic layer : | $Gd_{12}Dy_{13}Fe_{60}Co_{15}$ | 1200 angstroms |
| Third magnetic layer : | $Tb_{16}Fe_{84}$ | 200 angstroms |
| Fourth magnetic layer : | $Tb_{30}Co_{70}$ | 400 angstroms |
| Protective layer : | $SiN_x$ | 700 angstroms |

These layers are formed on a glass substrate by sputtering or the like. The magnetic layers adjacent each other are exchange-coupled.

Fig. 19 shows the magnetization curves at room temperature. The two magnetization curves which relates solely at the second magnetic layer, the transition from the state "1'" to the state "1" takes place when the two reversal magnetic fields of the c-loop is present on the same side of the zero. It is seen that the curve does not extends over both side of the zero and the transition from the state "1'" to the state "1" can take place.

The magnetic characteristics of the present embodiment is as follows:

$$Tc4 > Tc2 > Tc1 > Tc3 > \text{room temperature} \quad (1)$$

For the first magnetic layer :

$$Hw1 < Hc1 \text{ at about room temperature} \quad (2)$$

$$Hw1 > Hc1 \text{ at about } Tc1 \quad (3)$$

For the second magnetic layer :

$$Hw2 > Hc2 \text{ at about room temperature} \quad (4)$$

For the third magnetic layer :

$$Hw3 > Hc3 \text{ below } Tc3 \quad (5)$$

For the fourth magnetic layer :

$$Hw4 < Hc4 \text{ within operating temperature range} \quad (6)$$

The relationship (2) indicates that the magnetization of the first magnetic layer is not reversed by the reversal of the magnetization of the second magnetic layer, and the relationships (4) to (6) indicate that the magnetizations of the second magnetic layer, the third magnetic layer and the fourth magnetic layer after the recording are all downward.

A magneto-optic recording medium with a substrate having grooves at 1.6 μ m intervals and having a dielectric layer, magnetic layers and a protective layer provided thereon were tested by writing signals with a bit length of 0.76 μ m over signals with a bit length of 2 μ m at a linear velocity of 11 m/sec., an applied magnetic field 350 oersteds and the laser beam power of 15 mW for the peak power and 6 mW for the bottom power. As a result, no unerased signals were observed, and the CN ratio of 46 dB was obtained.

## Embodiments 3 to 9

Embodiments 3 to 9 are shown in Table 2 and Table 3. Magnetic media of these embodiments are formed in the same way as described with reference to the Embodiment 1. Table 3 shows recording and reproducing characteristics when signals with a bit length of 0.76μ m were written over signals with a bit length of 2 μ m at a linear velocity of 11 m/sec. with varying number of chips on the target and the sputtering time. No unerased signals were observed, and direct overwriting was confirmed.

TABLE 2

| No. | 1st Layer | 2nd Layer | 3rd Layer | 4th Layer |
|---|---|---|---|---|
| 3 | $Tb_{23}Fe_{72}Co_5$ 800Å | $Gd_5Dy_{22}Fe_{65}Co_8$ 2000Å | $Tb_{20}Fe_{80}$ 800Å | $Tb_{24}Co_{76}$ 2000Å |
| 4 | $Tb_{23}Fe_{72}Co_5$ 800Å | $Gd_5Dy_{22}Fe_{65}Co_8$ 1500Å | $Tb_{20}Fe_{80}$ 100Å | $Tb_{24}Co_{76}$ 1000Å |
| 5 | $Tb_{23}Fe_{72}Co_5$ 800Å | $Gd_5Dy_{22}Fe_{65}Co_8$ 1200Å | $Tb_{20}Fe_{80}$ 100Å | $Gd_8Tb_{16}Co_{76}$ 700Å |
| 6 | $Tb_{23}Fe_{72}Co_5$ 800Å | $Gd_5Dy_{22}Fe_{65}Co_8$ 1200Å | $Tb_{20}Fe_{80}$ 100Å | $Tb_{22}Co_{78}$ 400Å |
| 7 | $Tb_{23}Fe_{77}$ 1000Å | $Gd_5Dy_{22}Fe_{65}Co_8$ 1200Å | $Tb_{15}Dy_5Fe_{80}$ 100Å | $Tb_{28}Co_{72}$ 400Å |
| 8 | $Tb_{23}Fe_{72}Co_5$ 1000Å | $Gd_5Dy_{22}Fe_{65}Co_8$ 1200Å | $Tb_{20}Fe_{76}Co_4$ 100Å | $Tb_{28}Co_{72}$ 400Å |
| 9 | $Tb_{23}Fe_{72}Co_5$ 1000Å | $Gd_5Dy_{22}Fe_{65}Co_8$ 1200Å | $Tb_{20}Fe_{76}Co_4$ 100Å | $Tb_{20}Co_{80}$ 600Å |

TABLE 3

| No. | Peak Power (mW) | Bottom Power (mW) | Bias Field (oersteds) | CN Ratio (dB) |
|---|---|---|---|---|
| 3 | 16.0 | 7.0 | 500 | 42.1 |
| 4 | 14.0 | 6.5 | 350 | 43.0 |
| 5 | 13.0 | 4.5 | 700 | 45.1 |
| 6 | 11.5 | 4.5 | 350 | 46.2 |
| 7 | 10.0 | 4.0 | 250 | 41.1 |
| 8 | 13.0 | 5.0 | 300 | 47.0 |
| 9 | 13.0 | 5.0 | 100 | 45.1 |

Each of the magnetic layers may be formed of multi-layer film. An additional magnetic layer exhibiting greater magneto-optic effects may be formed before the formation of the first magnetic layer. When

| | | |
|---|---|---|
| Dielectric layer : | $SiN_x$ | 650 angstroms |
| Reproducing layer : | $Tb_{15}Fe_{70}Co_{15}$ | 100 angstroms |
| First magnetic layer : | $Tb_{22}Fe_{69}Co_9$ | 800 angstroms |
| Second magnetic layer : | $Gd_8Dy_{17}Fe_{60}Co_{15}$ | 1500 angstroms |
| Third magnetic layer : | $Tb_{16}Fe_{84}$ | 200 angstroms |
| Fourth magnetic layer : | $Tb_{30}Co_{70}$ | 400 angstroms |
| Protective layer : | $SiN_x$ | 700 angstroms |

were formed by sputtering on a glass substrate, an improvement in CN ratio of 1dB was observed.

It is also possible to form a magnetic layer, a dielectric layer, an oxide layer or the like between magnetic layers to control the exchange-coupling. Each magnetic layer may be formed of a ferrimagnetic material, such as GdFe, GdTbFeCo, TbDyFeCo, NdDyFeCo, DyCo, TbHoFeCo, and DyHoCo.

The recording medium in the above embodiments is single-sided, i.e., it consists of a single recording plate comprising the first to fourth magnetic layers, with or without the control layers being interposed described above. But the recording medium may alternatively be double-sided, i.e., it may comprise two recording plates each comprising the first to the fourth magnetic layers, with or without the control layers described above, with the two recording plates being joined together by means of epoxy resin, thermo-plastic resin, thermo-setting resin or the like. The recording medium may be other than disk-shaped, may be in the form of a rectangular card.

Embodiment 10

Fig. 20 shows the configuration of a magneto-optic recording apparatus. In the figure, reference numeral 10 denotes a magneto-optic recording medium, 20 denotes a bias magnetic field generating device, 30 denotes a semiconductor laser, 40 denotes a polarizing beam splitter, and 50 denotes a reproducing device. The semiconductor laser is so constructed that its output laser beam during recording can be modulated between two levels which are higher than the level of the laser beam during reproducing. The bias magnetic field generating device is a permanent magnet applying a magnetic field of 350 oersteds on the surface of the magneto-optic recording medium. An electromagnet may alternatively be employed. The magneto-optic recording medium of Embodiment 1 was used, and the signals with the bit length of 0.76 $\mu$ m were written over the signals with the bit length of 2.0 $\mu$ m at a linear velocity of 11 m/sec., with the applied magnetic field of 350 oersteds, and with the laser beam being modulated between peak power of 15 mW, and the bottom power of 6 mW. No unerased signals were observed, and the CN ratio of 46 dB was obtained.

Embodiment 11

Fig. 21 shows the configuration of a magneto-optic recording apparatus. In the figure, reference numeral 10 denotes a magneto-optic recording medium, 20 denotes a bias magnetic field generating device, 30 denotes a semiconductor laser, 40 denotes a polarizing beam splitter, and 50 denotes a reproducing device. The semiconductor laser is so constructed that its output laser beam is frequency modulated. That is, the output laser beam consist of a series of pulses whose frequency is much higher than the maximum frequency of the recorded signals (signal bits). The frequency of the pulses is varied depending on whether High writing or Low writing is to be made. For instance, for High writing, the frequency of the pulses is 20 times the maximum frequency of the recorded signals, and, for Low writing, the frequency of the signals is 10 times the maximum frequency of the recorded signals. The pulse width is kept unchanged. When the magneto-optic recording medium of Embodiment 1 was used, and the signals with the bit length of 0.76 μ m were written over the signals with the bit length of 2.0 μ m at a linear velocity of 11 m/sec., with the applied magnetic field of 350 oersteds, and with the laser beam being modulated at 15 mW for the peak power. Recording was achieved with no unerased signals being observed.

Embodiment 12

Fig. 22 shows the configuration of a magneto-optic recording apparatus. In the figure, reference numeral 10 denotes a magneto-optic recording medium, 20 denotes a bias magnetic field generating device, 301 and 302 denote semiconductor lasers, 40 denotes a polarizing beam splitter, 50 denotes a reproducing device, 60 denotes a beam splitter. The semiconductor lasers 301 and 302 have a wavelength of 830 nm and a maximum continuous emission output of 16 mW and their output beams are focused at locations close to each other. One laser keeps emitting a laser output corresponding to Low writing, while the other laser emits a laser output necessary to attain the temperature for the High writing only when the information "1" is to be written. When the magneto-optic recording medium of Embodiment 1 was used, maximum laser output was 10 mW, reduced by 3 mW, and overwriting was achieved.

Embodiment 13

Fig. 23 shows the configuration of a magneto-optic recording apparatus. In the figure, reference numeral 10 denotes a magneto-optic recording medium, 20 denotes a bias magnetic field generating device, 301 and 302 denote semiconductor lasers, 40 denotes a polarizing beam splitter, 50 denotes a reproducing device, and 60 denotes a beam splitter. The semiconductor laser 301 is for recording with a wavelength of 830 nm and with a maximum continuous emission output of 20 mW. The semiconductor laser 302 is for reproducing with a wavelength of 780 nm and with a maximum continuous emission output of 4 mW. It can follow the laser spot of the laser 301 and can make verification at the same time as the overwriting. The data transfer rate during recording is about the same as the data transfer rate during reproducing.

Embodiment 14

Fig. 24 shows the configuration of a magneto-optic recording apparatus. In the figure, reference numeral 10 denotes a magneto-optic recording medium, 20 denotes a bias magnetic field generating device, 301 and 302 denote semiconductor lasers with the same wavelength of 830 nm and with the maximum continuous emission output of 20 mW, 40 denotes a polarizing beam splitter, 50 denotes a reproducing device, and 60 denotes a beam splitter. The laser beam are focused on adjacent tracks on a magneto-optic recording medium, and simultaneous recording can be made.

In each of the embodiments, the magneto-optic recording medium was moved. But alternatively the laser may be in the form of an array or a matrix and recording and reproducing can be made without the magneto-optic recording medium being moved.

It is also possible to dispose an optical element, such as a liquid crystal panel, whose transmittance varies over space, on the path of the laser beam.

As has been described according to the invention, the initializing magnet is eliminated so that the size and weight of the device are reduced. Moreover, it is now possible to conduct overwriting by means of laser beam modulation.

## Claims

**1.** A magneto-optic recording medium comprising a first magnetic layer having a perpendicular magnetic anisotopy, a second magnetic layer provided on said first magnetic layer and exchange coupled with said first magnetic layer, said second magnetic layer being a rare earth metal sublattice dominant film, a third magnetic layer provided on said second magnetic layer and exchange coupled with said second magnetic layer, and a fourth magnetic layer provided on said third magnetic layer and exchange coupled with said third magnetic layer, wherein the following relationships exist:

i) the Curie temperature of said second magnetic layer (TC2) is higher than the Curie temperature of said first magnetic layer (TC1);
ii) the Curie temperature of said second magnetic layer (TC2) is higher than the Curie temperature of said third magnetic layer (TC3);
iii) the Curie temperature of said fourth magnetic layer (TC4) is higher than the Curie temperature of said third magnetic layer (TC3);
iv) the magnetisation of said first magnetic layer is not reversed due to the reversal of the magnetisation of said second magnetic layer at room temperature; and
v) the directions of the sublattice magnetisation of said second magnetic layer, said third magnetic layer and said fourth magnetic layer are parallel with each other at room temperature after a recording operation; characterised in that
vi) the Curie temperature of said fourth magnetic layer (TC4) is higher than the Curie temperature of said first magnetic layer (TC1),
vii) the Curie temperature of said fourth magnetic layer (TC4) is greater than the Curie temperature of said second magnetic layer (TC2),
viii) there is a temperature between room temperature and the lower one of the Curie temperature of said first magnetic layer (TC1) and the Curie temperature of said third magnetic layer (TC3) at which the relationships

$Hc2 < Hw2$ at about Tc3 or below; and
$Hw3 > Hc3$ at about Tc3 or below and at or above room temperature are satisfied, and

ix) the third magnetic layer has a perpendicular magnetic anisotropy,
where

Hc2 is the coercivity of said second magnetic layer that is obtained when said four layers are stacked with one another and the sublattice magnetisations of said first magnetic layer and said third magnetic layer are not parallel, and
Hw2 is the exchange coupling which said second magnetic layer receives from said first magnetic layer and said third magnetic layer when said four layers are stacked with one another and the sublattice magnetisations of said first magnetic layer and said third magnetic layer are not parallel.

**2.** A recording medium according to Claim 1, wherein the thickness of said first magnetic layer is not less than 200 angstroms and not more than 1200 angstroms.

**3.** A recording medium according to Claim 1 or 2, wherein the thickness of said second magnetic layer is greater than the thickness of said first magnetic layer.

**4.** A recording medium according to any one of Claims 1 to 3, wherein said second magnetic layer contains iron and cobalt and the ratio of cobalt to the sum of iron and cobalt is smaller than 0.5.

**5.** A recording medium according to any one of Claims 1 to 4, wherein the fourth magnetic layer contains iron and cobalt and the ratio of cobalt to the sum of iron and cobalt is larger than 0.5.

**6.** A recording medium according to any one of Claims 1 to 4, wherein said second magnetic layer is an amorphous magnetic film of a transition metal and a rare-earth metal containing gadolinium (Gd) and dysprosium (Dy).

**7.** A recording medium according to any one of Claims 1 to 6, wherein said third magnetic layer is a transition metal sublattic dominant film.

**8.** A recording medium according to any one of Claims 1 to 7, wherein said third magnetic layer is an amorphous magnetic film consisting of a rare-earth metal and a transition metal, wherein the transition metal has a composition of $Fe_{1-x}Co_x$, with $0 \le x \le 0.3$.

**9.** A recording medium according to any one of Claims 1 to 8, wherein said third magnetic layer has a thickness which is greater than 100 angstroms and smaller than 800 angstroms.

**10.** A recording medium according to any one of Claims 1 to 9, wherein said third magnetic layer and said fourth magnetic layer contain terbium (Tb).

**11.** A magneto-optic recording and reproducing apparatus for recording information in a recording layer of a magneto-optic recording medium in the form of a bit having an upward magnetisation and a bit having a downward magnetisation, which comprises the magneto-optic recording medium according to any one of Claims 1 to 10, and further comprising:

means for irradiating a laser beam on the medium,
means for heating said magneto-optic recording medium to two or more valves in accordance with the binary information to be recorded, and
means for applying a recording magnetic field to the part of the medium where said beam is irradiated.

**12.** Apparatus according to Claim 11, wherein a reproducing laser beam is provided in the proximity of the recording laser beam.

**13.** Apparatus according to Claim 12, wherein the recording laser beam and the reproducing laser beam have different wavelengths.

**Patentansprüche**

**1.** Magneto-optischer Aufzeichnungsträger, enthaltend eine erste magnetische Schicht, die eine rechtwinklige magnetische Anisotropie besitzt, eine zweite magnetische Schicht, die sich auf der genannten ersten magnetischen Schicht befindet und mit der genannten ersten magnetischen Schicht über Austauschkräfte wechselwirkt, wobei die genannte zweite magnetische Schicht ein Grundfilm aus einem Seltenerdenmetall-Untergitter ist, eine dritte magnetische Schicht, die sich auf der genannten zweiten magnetischen Schicht befindet und mit der genannten zweiten magnetischen Schicht über Austauschkräfte wechselwirkt, und eine vierte magnetische Schicht, die sich auf der genannten dritten magnetischen Schicht befindet und mit der genannten dritten magnetischen Schicht über Austauschkräfte wechselwirkt, wobei die folgenden Beziehungen bestehen:

i) die Curie-Temperatur der genannten zweiten magnetischen Schicht (TC2) ist höher als die Curie-Temperatur der genannten ersten magnetischen Schicht (TC1);
ii) die Curie-Temperatur der genannten zweiten magnetischen Schicht (TC2) ist höher als die Curie-Temperatur der genannten dritten magnetischen Schicht (TC3);
iii) die Curie-Temperatur der genannten vierten magnetischen Schicht (TC4) ist höher als die Curie-Temperatur der genannten dritten magnetischen Schicht (TC3);
iv) die Magnetisierung der genannten ersten magnetischen Schicht wird durch die Umkehr der Magnetisierung der genannten zweiten magnetischen Schicht bei Zimmertemperatur nicht umgekehrt; und
v) die Richtungen der Untergittermagnetisierung der genannten zweiten magnetischen Schicht, der genannten dritten magnetischen Schicht und der genannten vierten magnetischen Schicht sind nach einer Aufzeichnung bei Zimmertemperatur parallel zu einander;

dadurch charakterisiert, daß

vi) die Curie-Temperatur der genannten vierten magnetischen Schicht (TC4) höher ist als die Curie-Temperatur der genannten ersten magnetischen Schicht (TC1),
vii) die Curie-Temperatur der genannten vierten magnetischen Schicht (TC4) höher ist als die Curie-Temperatur der genannten zweiten magnetischen Schicht (TC2),
viii) es eine Temperatur zwischen der Zimmertemperatur und der niedrigeren der Curie-Temperatur der genannten ersten magnetischen Schicht und der Curie-Temperatur der genannten dritten magnetischen Schicht (TC3) gibt, bei welcher die Beziehungen

$Hc2 < Hw2$ bei etwa TC3 oder geringer; oder
$Hw3 > Hc3$ bei etwa TC3 oder geringer und

bei oder oberhalb von Zimmertemperatur erfüllt sind, und
ix) die dritte magnetische Schicht eine senkrechte magnetische Anisotropie besitzt, wobei Hc2 die Koerzitivkraft der genannten zweiten magnetischen Schicht ist, die erhalten wird, wenn die genannten vier Schichten übereinander gestapelt werden und die Magnetisierungen der Untergitter der genannten ersten magnetischen Schicht und der genannten dritten magnetischen Schicht nicht parallel sind, und
Hw2 die Austausch-Wechselwirkung ist, die die genannte zweite magnetische Schicht von der genannten ersten magnetischen Schicht und der genannten dritten magnetischen Schicht erfährt, wenn die genannten vier Schichten übereinander gestapelt werden und die Magnetisierungen der Untergitter der genannten ersten magnetischen Schicht und der genannten dritten magnetischen Schicht nicht parallel sind.

2. Aufzeichnungsträger nach Anspruch 1, wobei die Dicke der genannten ersten magnetischen Schicht nicht geringer als 200 Angström und nicht größer als 1200 Angström ist.

3. Aufzeichnungsträger nach Anspruch 1 oder 2, wobei die Dicke der genannten zweiten magnetischen Schicht größer als die Dicke der genannten ersten magnetischen Schicht ist.

4. Aufzeichnungsträger nach einem der Ansprüche 1 bis 3, wobei die genannte zweite magnetische Schicht Eisen und Kobalt enthält und das Verhältnis von Kobalt zu der Summe aus Eisen und Kobalt kleiner als 0,5 ist.

5. Aufzeichnungsträger nach einem der Ansprüche 1 bis 4, wobei die vierte magnetische Schicht Eisen und Kobalt enthält und das Verhältnis von Kobalt zu der Summe aus Eisen und Kobalt größer als 0,5 ist.

6. Aufzeichnungsträger nach einem der Ansprüche 1 bis 4, wobei die genannte zweite magnetische Schicht ein amorpher, magnetischer Film aus einem Übergangsmetall und einem Seltenerden-Metall ist, der Gadolinium (Gd) und Dysprosium (Dy) enthält.

7. Aufzeichnungsträger nach einem der Ansprüche 1 bis 6, wobei die genannte dritte magnetische Schicht ein Untergitter-Grundfilm aus einem Übergangsmetall ist.

8. Aufzeichnungsträger nach einem der Ansprüche 1 bis 7, wobei die genannte dritte magnetische Schicht ein amorpher magnetischer Film ist, der aus einem Seltenerden-Metall und einem Übergangsmetall besteht, wobei das Übergangsmetall eine Zusammensetzung aus $Fe_{1-x}Co_x$ mit $0 \leq x \leq 0,3$ besitzt.

9. Aufzeichnungsträger nach einem der Ansprüche 1 bis 8, wobei die genannte dritte magnetische Schicht eine Dicke besitzt, die größer als 100 Angström und geringer als 800 Angström ist.

10. Aufzeichnungsträger nach einem der Ansprüche 1 bis 9, wobei die dritte magnetische Schicht und die genannte vierte magnetische Schicht Terbium (Tb) enthalten.

11. Magneto-optisches Aufzeichnungs- und Wiedergabegerät zur Aufzeichnung von Informationen in einer Aufzeichnungsschicht eines magneto-optischen Aufzeichnungsträgers in der Form eines Bits mit einer Aufwärtsmagnetisierung und eines Bits mit einer Abwärtsmagnetisierung, das den magnetooptischen Aufzeichnungsträger nach einem der Ansprüche 1 bis 10 umfaßt und weiterhin umfaßt:

   eine Vorrichtung, um einen Laserstrahl auf den Träger zu strahlen,
   eine Vorrichtung, um den genannten magnetooptischen Aufzeichnungsträger in Übereinstimmung mit der aufzuzeichnenden Binärinformation auf zwei oder mehr Werte zu erwärmen, und
   eine Vorrichtung, um ein magnetisches Aufzeichnungsfeld an denjenigen Teil des Trägers anzulegen, auf den der genannte Strahl gestrahlt wird.

12. Gerät nach Anspruch 11, wobei in der Nähe des aufzeichnenden Laserstrahls ein wiedergebender Laserstrahl zur Verfügung gestellt wird.

13. Gerät nach Anspruch 12, wobei der aufzeichnende Laserstrahl und der wiedergebende Laserstrahl unterschiedliche Wellenlängen besitzen.

**Revendications**

1. Milieu d'enregistrement magnéto-optique comprenant une première couche magnétique ayant une anisotropie magnétique perpendiculaire, une deuxième couche magnétique prévue sur ladite première couche magnétique et en couplage d'échange avec ladite première couche magnétique, ladite deuxième couche magnétique étant un film en métal de terres rares surmontant un sous-réseau cristallin, une troisième couche magnétique prévue sur ladite deuxième couche magnétique et en couplage d'échange avec ladite deuxième couche magnétique, et une quatrième couche magnétique prévue sur ladite troisième couche magnétique et en couplage d'échange avec ladite troisième couche magnétique, dans lequel existent les relations suivantes :

   i) la température de Curie de ladite deuxième couche magnétique (TC2) est supérieure à la température de Curie de ladite première couche magnétique (TC1);
ii) la température de Curie de ladite deuxième couche magnétique (TC2) est supérieure à la température de Curie de ladite troisième couche magnétique (TC3);
iii) La température de Curie de ladite quatrième couche magnétique (TC4) est supérieure à la température de Curie de ladite troisième couche magnétique (TC3);
iv) l'aimantation de ladite première couche magnétique n'est pas inversée à cause de l'inversion de l'aimantation de ladite deuxième couche magnétique à la température ambiante; et
v) les directions de l'aimantation du sous-réseau cristallin de ladite deuxième couche magnétique, de ladite troisième couche magnétique et de ladite quatrième couche magnétique sont parallèles les unes par rapport aux autres à température ambiante après une opération d'enregistrement; caractérisé en ce que
vi) la température de Curie de ladite quatrième couche magnétique (TC4) est supérieure à la température de Curie de ladite première couche magnétique (TC1),
vii) la température de Curie de ladite quatrième couche magnétique (TC4) est supérieure à la température de Curie de ladite deuxième couche magnétique (TC2),
viii) il existe une température entre la température ambiante et la plus basse de la température de Curie de ladite première couche magnétique (TC1) et de la température de Curie de ladite troisième couche magnétique (TC3) au niveau de laquelle les relations

Hc2 < Hw2 aux environs de TC3 ou au-dessous; et
Hw3 > Hc3 aux environs de TC3 ou au-dessous et aux environs ou au-dessus de la température ambiante sont satisfaites, et

ix) la troisième couche magnétique possède une anisotropie magnétique perpendiculaire
où

Hc2 est la force de coercition de ladite deuxième couche magnétique qui est obtenue lorsque lesdites quatre couches sont empilées les unes sur les autres et lorsque les aimantations du sous-réseau cristallin de ladite première couche magnétique et de ladite troisième couche magnétique ne sont pas parallèles, et
Hw2 est le couplage d'échange que reçoit ladite deuxième couche magnétique en provenance de ladite première couche magnétique et de ladite troisième couche magnétique lorsque quatre couches sont empilées les unes sur les autres-et lorsque les aimantations du sous-réseau cristallin de ladite première couche magnétique et de ladite troisième couche magnétique ne sont pas parallèles.

**2.** Milieu d'enregistrement selon la revendication 1, dans lequel l'épaisseur de ladite première couche magnétique n'est pas inférieure à 200 angströms et n'est pas supérieure à 1200 angströms.

**3.** Milieu d'enregistrement selon la revendication 1 ou 2, dans lequel l'épaisseur de ladite deuxième couche magnétique est supérieure à l'épaisseur de ladite première couche magnétique.

**4.** Milieu d'enregistrement selon l'une quelconque des revendications 1 à 3, dans lequel ladite deuxième couche magnétique contient du fer et du cobalt et la proportion de cobalt par rapport à la somme de cobalt et de fer est inférieure à 0,5.

**5.** Milieu d'enregistrement selon l'une quelconque des revendications 1 à 4, dans lequel la quatrième couche magnétique contient du fer et du cobalt, et la proportion de cobalt par rapport à la somme de fer et de cobalt est supérieure à 0,5.

**6.** Milieu d'enregistrement selon l'une quelconque des revendications 1 à 4, dans lequel ladite deuxième couche magnétique est un film magnétique amorphe d'un métal de transition et d'un métal de terres rares contenant du gadolinium (Gd) et du dysprosium (Dy).

**7.** Milieu d'enregistrement selon l'une quelconque des revendications 1 à 6, dans lequel ladite troisième couche magnétique est un film de métal de transition surmontant un sous-réseau cristallin.

**8.** Milieu d'enregistrement selon l'une quelconque des revendications 1 à 7, dans lequel ladite troisième couche magnétique est un film magnétique amorphe consistant en un métal de terres rares et un métal de transition, dans lequel le métal de transition a une composition $Fe_{1-x}Co_x$, avec $0 \leq x \leq 0{,}3$.

9. Milieu d'enregistrement selon l'une quelconque des revendications 1 à 8, dans lequel ladite troisième couche magnétique a une épaisseur qui est supérieure à 100 angströms et inférieure à 800 angströms.

10. Milieu d'enregistrement selon l'une quelconque des revendications 1 à 9, dans lequel ladite troisième couche magnétique et ladite quatrième couche magnétique contiennent du terbium (Tb).

11. Appareil d'enregistrement et de reproduction magnéto-optique destiné à l'enregistrement d'informations sur une couche d'enregistrement d'un milieu d'enregistrement magnéto-optique sous la forme d'un bit ayant une aimantation vers le haut et d'un bit ayant une aimantation vers le bas, qui comprend le milieu d'enregistrement magnéto-optique selon l'une quelconque des revendications 1 à 10 et comprenant en outre :

    des moyens pour envoyer les rayons d'un faisceau laser sur le milieu,
    des moyens pour chauffer ledit milieu d'enregistrement magnéto-optique à deux ou plusieurs valeurs conformément à l'information binaire à enregistrer, et
    des moyens pour appliquer un champ magnétique d'enregistrement à la partie du milieu où ledit faisceau envoie ses rayons.

12. Appareil selon la revendication 11, dans lequel un faisceau laser de reproduction est prévu à proximité du faisceau laser d'enregistrement.

13. Appareil selon la revendication 12, dans lequel le faisceau laser d'enregistrement et le faisceau laser de reproduction ont des longueurs d'onde différentes.

FIG. 1

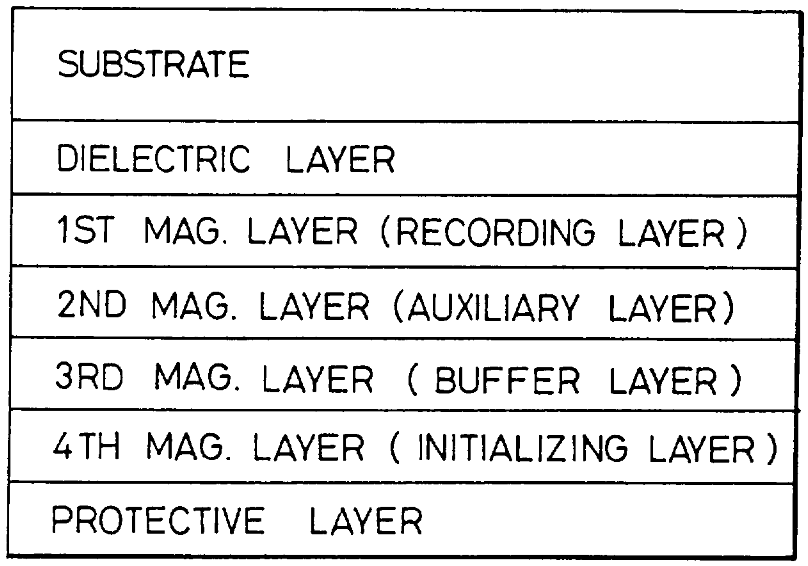
SUBSTRATE
DIELECTRIC LAYER
1ST MAG. LAYER (RECORDING LAYER)
2ND MAG. LAYER (AUXILIARY LAYER)
3RD MAG. LAYER (BUFFER LAYER)
4TH MAG. LAYER (INITIALIZING LAYER)
PROTECTIVE LAYER

FIG. 2

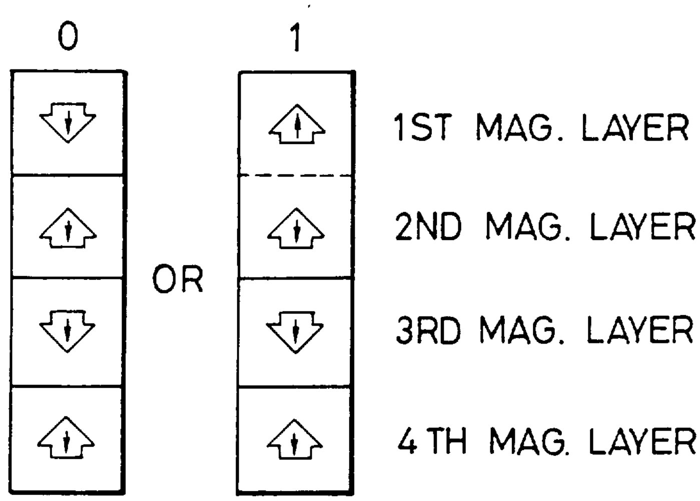
0
1
OR
1ST MAG. LAYER
2ND MAG. LAYER
3RD MAG. LAYER
4TH MAG. LAYER

FIG. 3

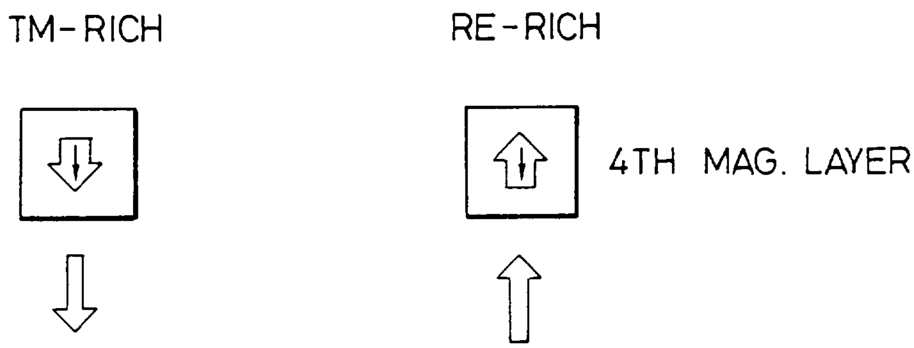
TM-RICH
RE-RICH
4TH MAG. LAYER

FIG. 4

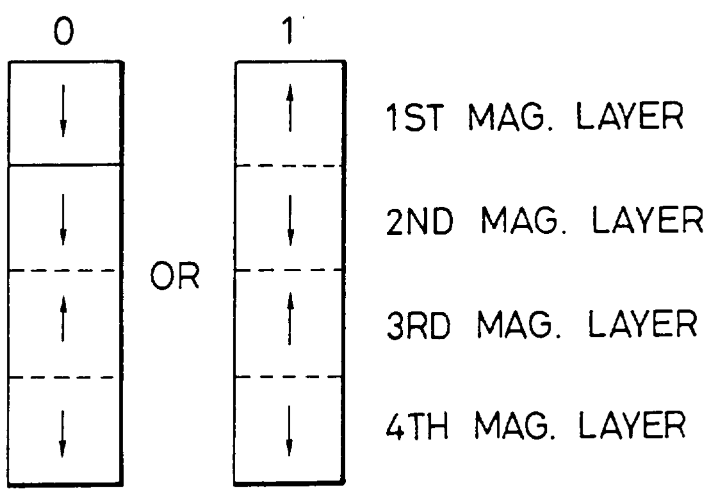
0
1
OR
1ST MAG. LAYER
2ND MAG. LAYER
3RD MAG. LAYER
4TH MAG. LAYER

FIG. 5

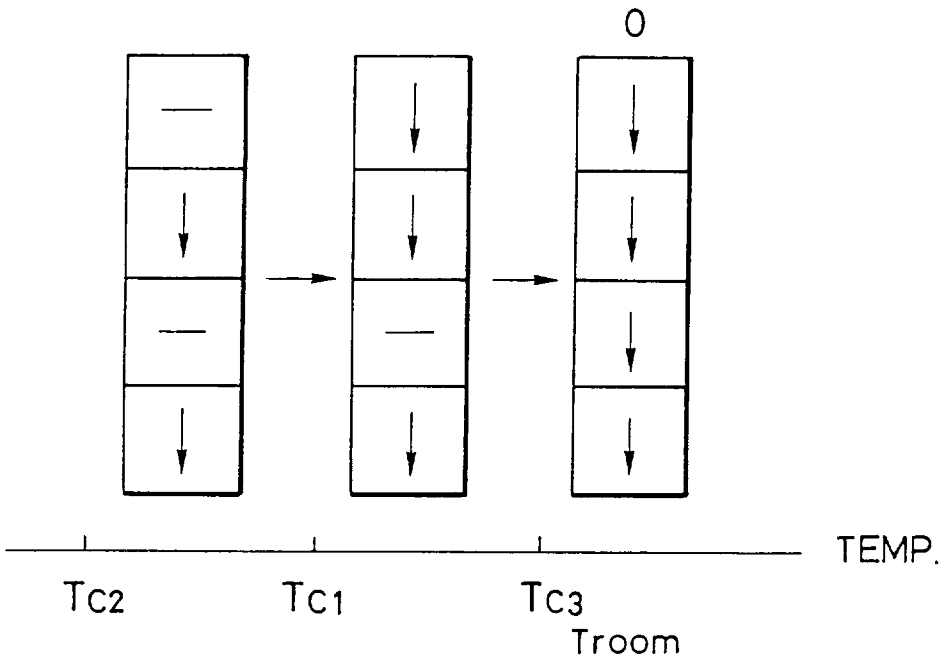


FIG. 6

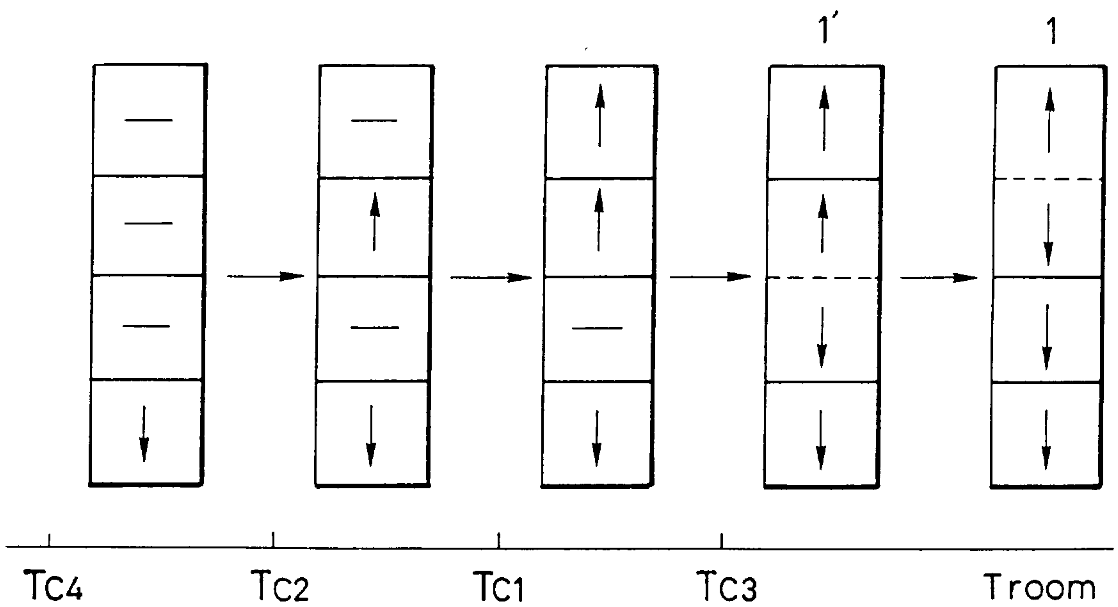

FIG. 7A

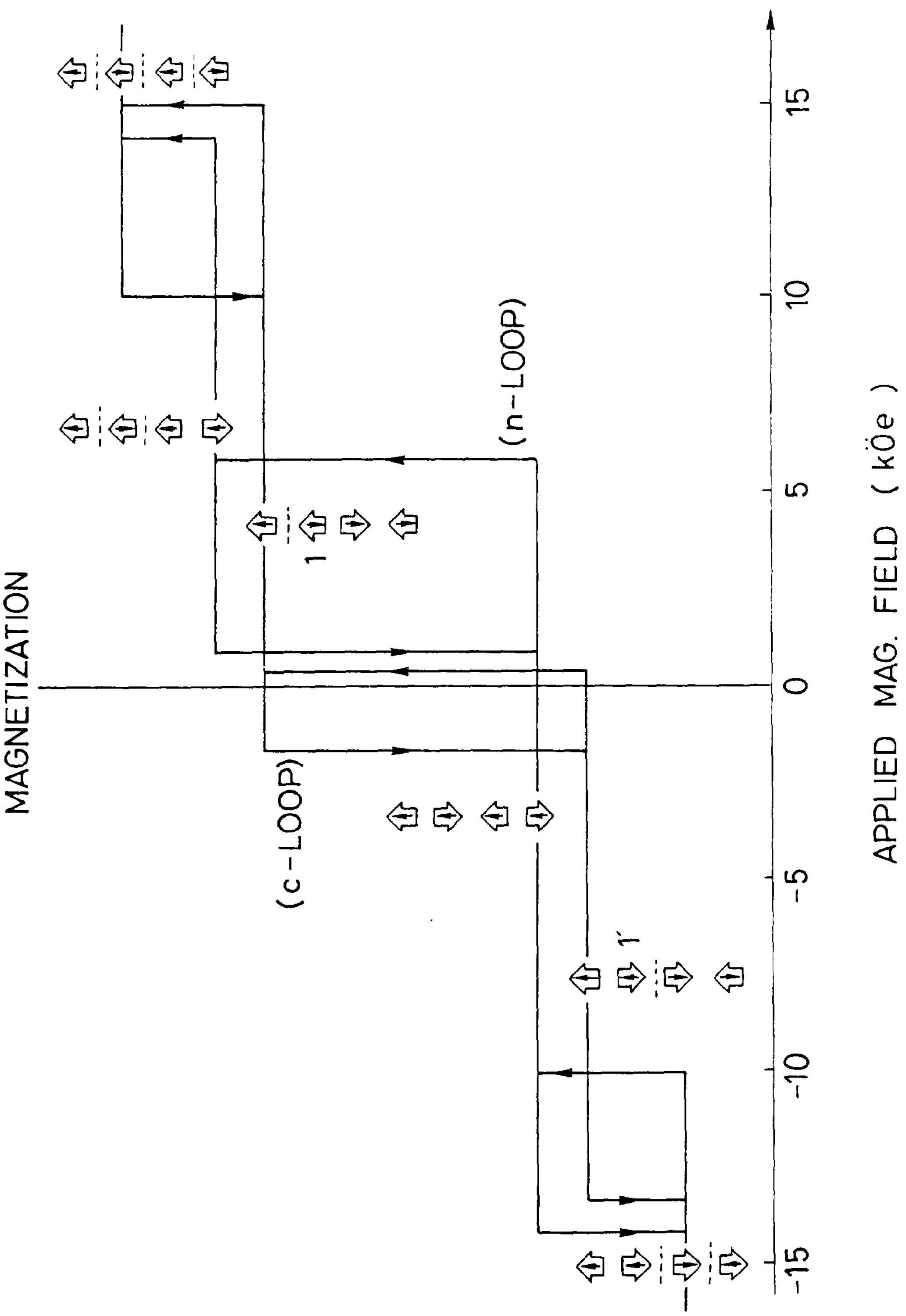
MAGNETIZATION
APPLIED MAG. FIELD ( kOe )
(n-LOOP)
(c-LOOP)
1
1'
-15
-10
-5
0
5
10
15

FIG. 7B

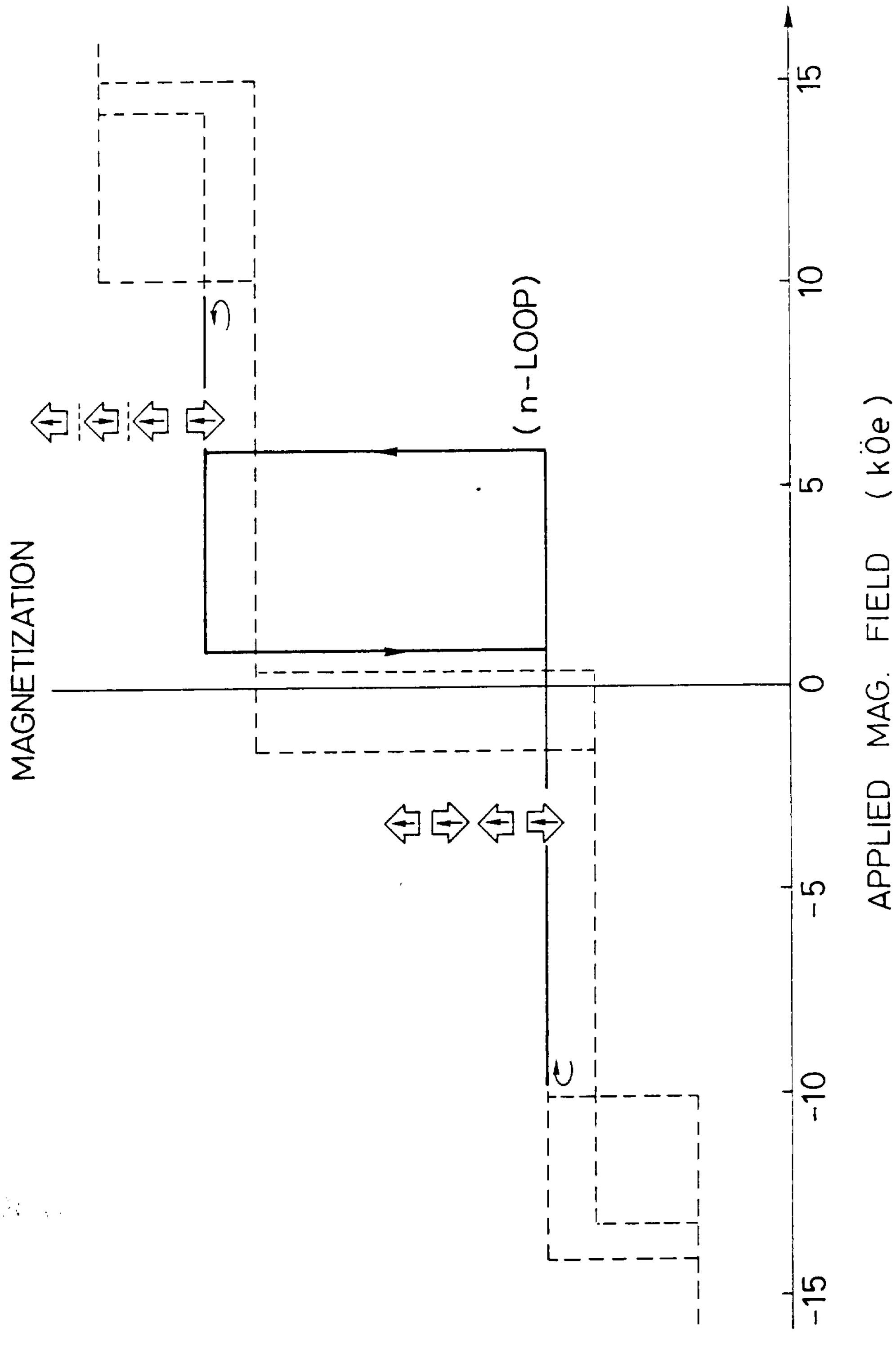

FIG. 7C

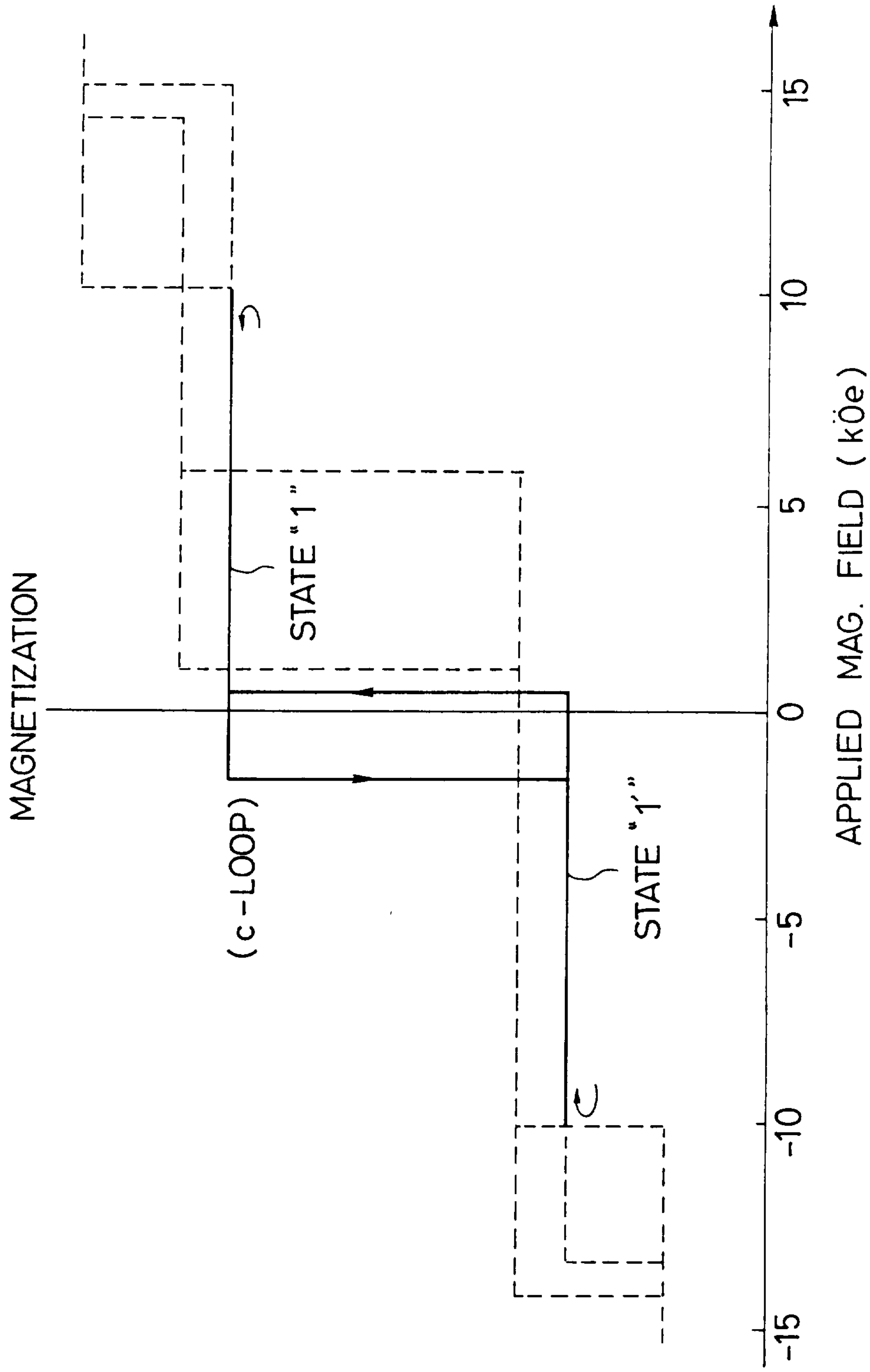
MAGNETIZATION
(c-LOOP)
STATE "1"
STATE "1'"
APPLIED MAG. FIELD (kÖe)
15
10
5
0
-5
-10
-15

FIG. 7D

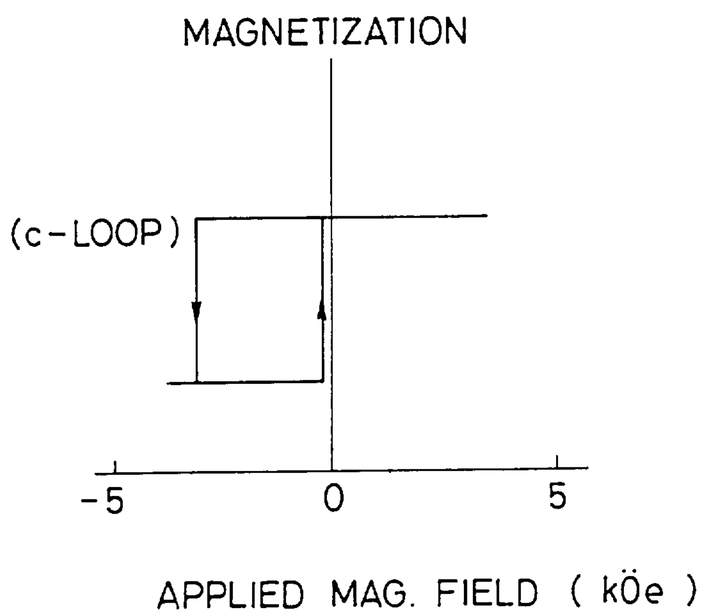

FIG. 8

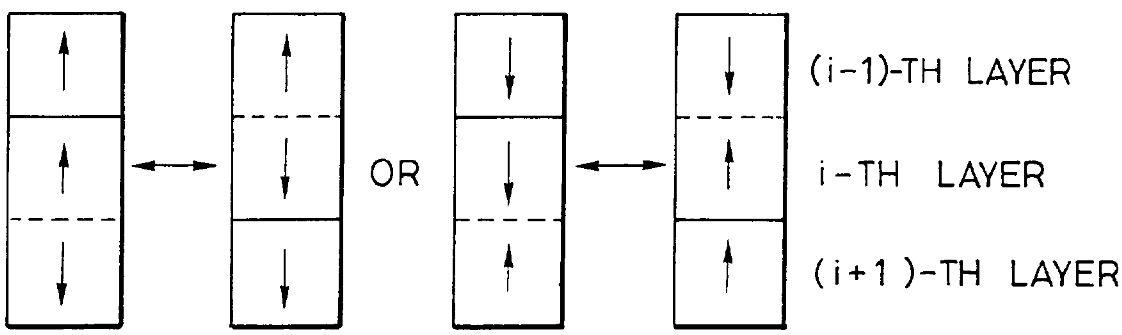

FIG. 9

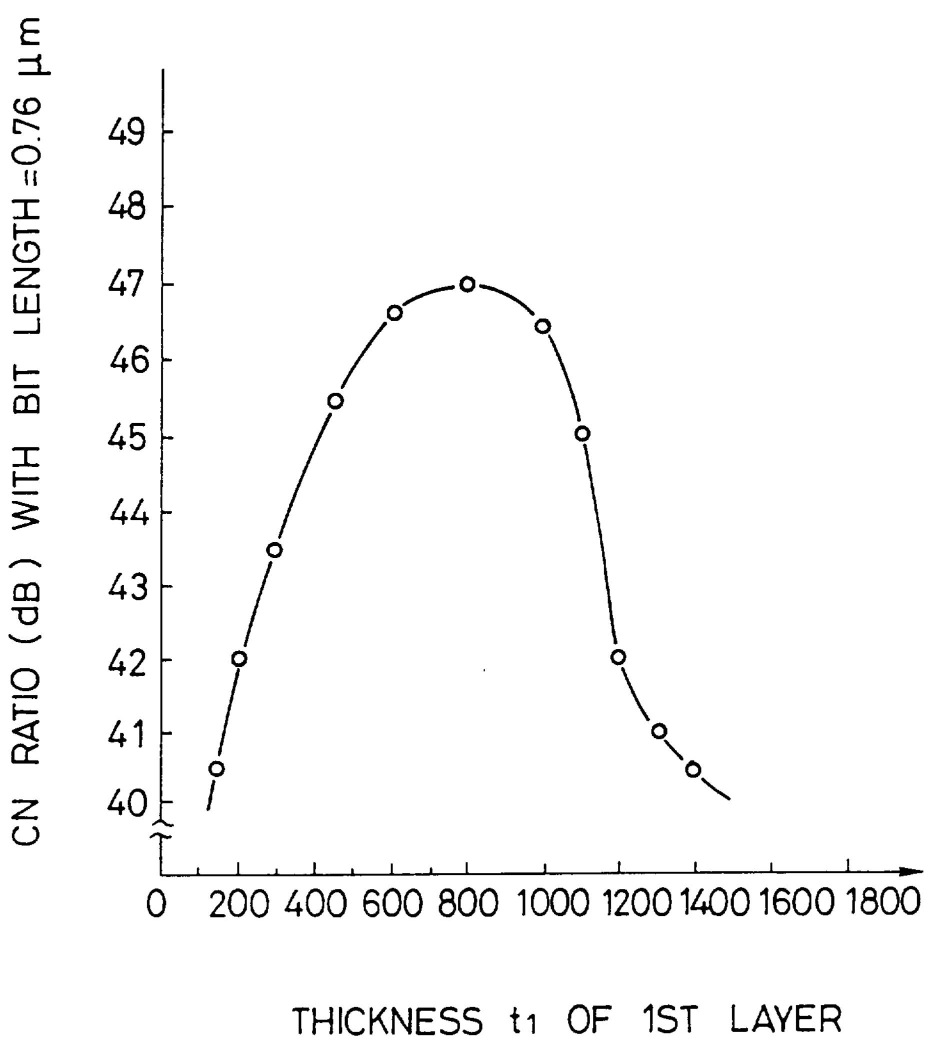
CN RATIO (dB) WITH BIT LENGTH =0.76 μm
49
48
47
46
45
44
43
42
41
40
0
200
400
600
800
1000
1200
1400
1600
1800
THICKNESS t1 OF 1ST LAYER

F I G. 10

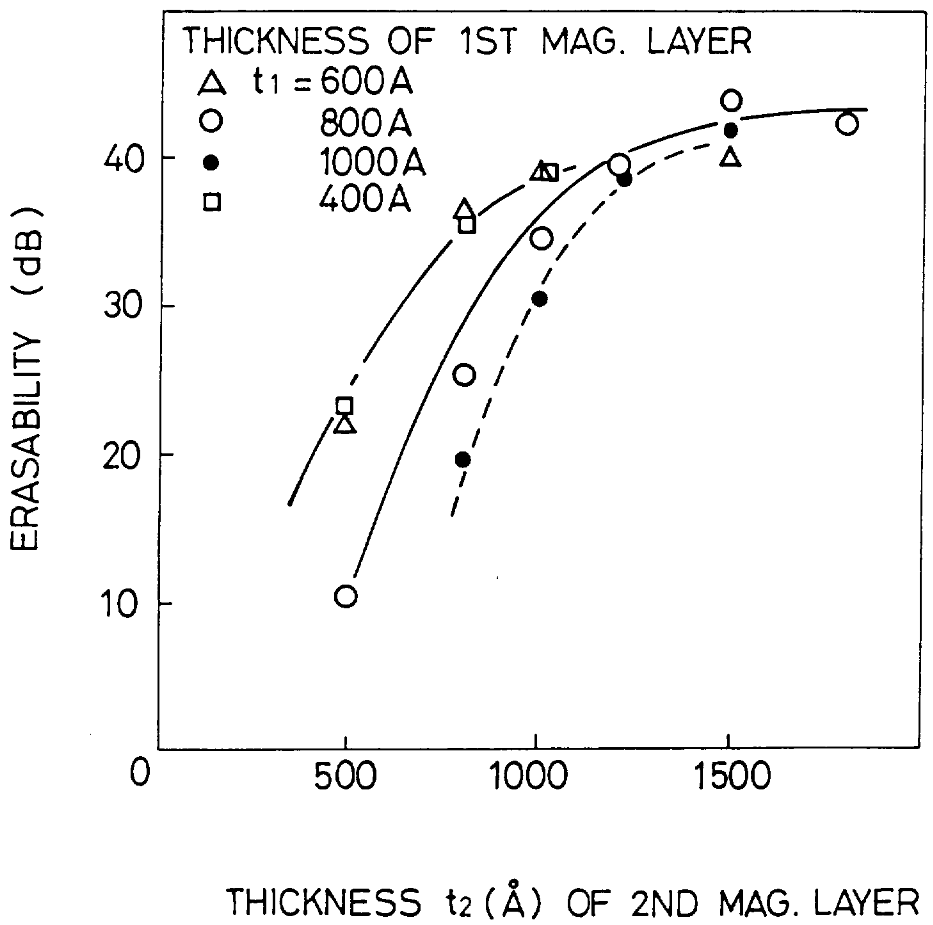
THICKNESS OF 1ST MAG. LAYER
△ t1 = 600A
○ 800A
● 1000A
□ 400A
ERASABILITY (dB)
40
30
20
10
0
500
1000
1500
THICKNESS t2 (Å) OF 2ND MAG. LAYER

FIG. 11

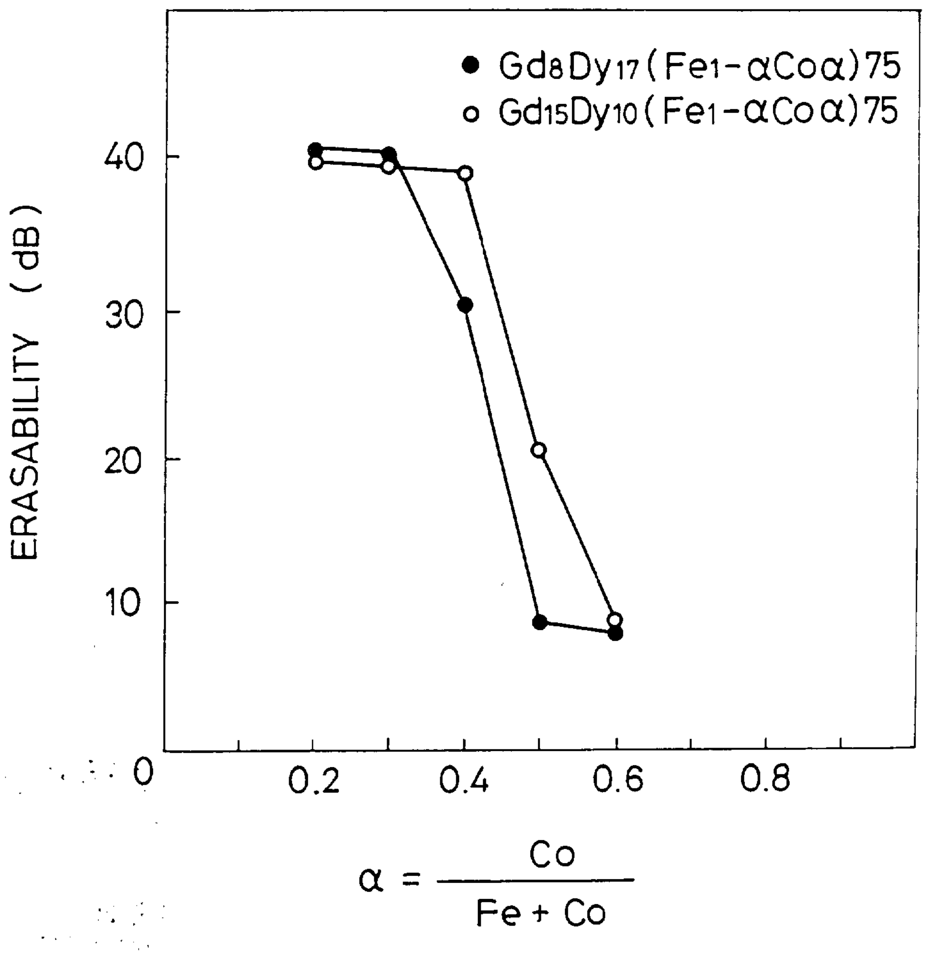
● Gd8Dy17(Fe1-αCoα)75
○ Gd15Dy10(Fe1-αCoα)75
ERASABILITY (dB)
40
30
20
10
0
0.2
0.4
0.6
0.8
α = Co / Fe + Co

FIG. 12

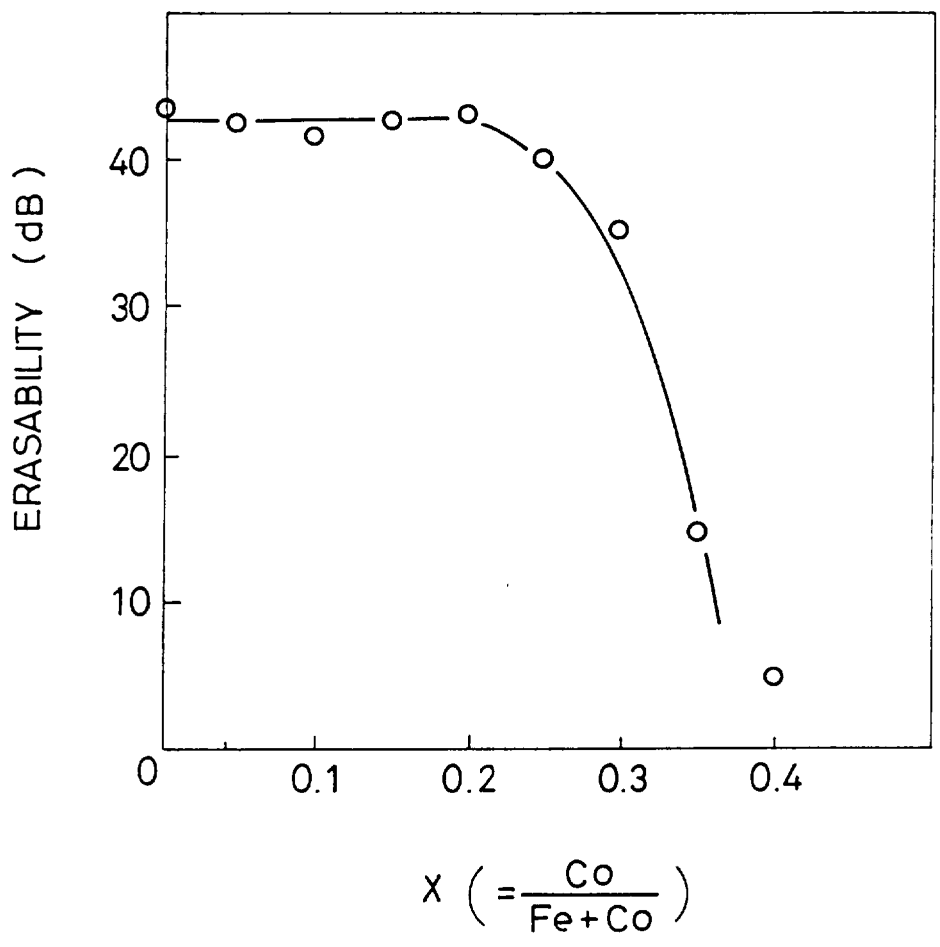

F I G. 13

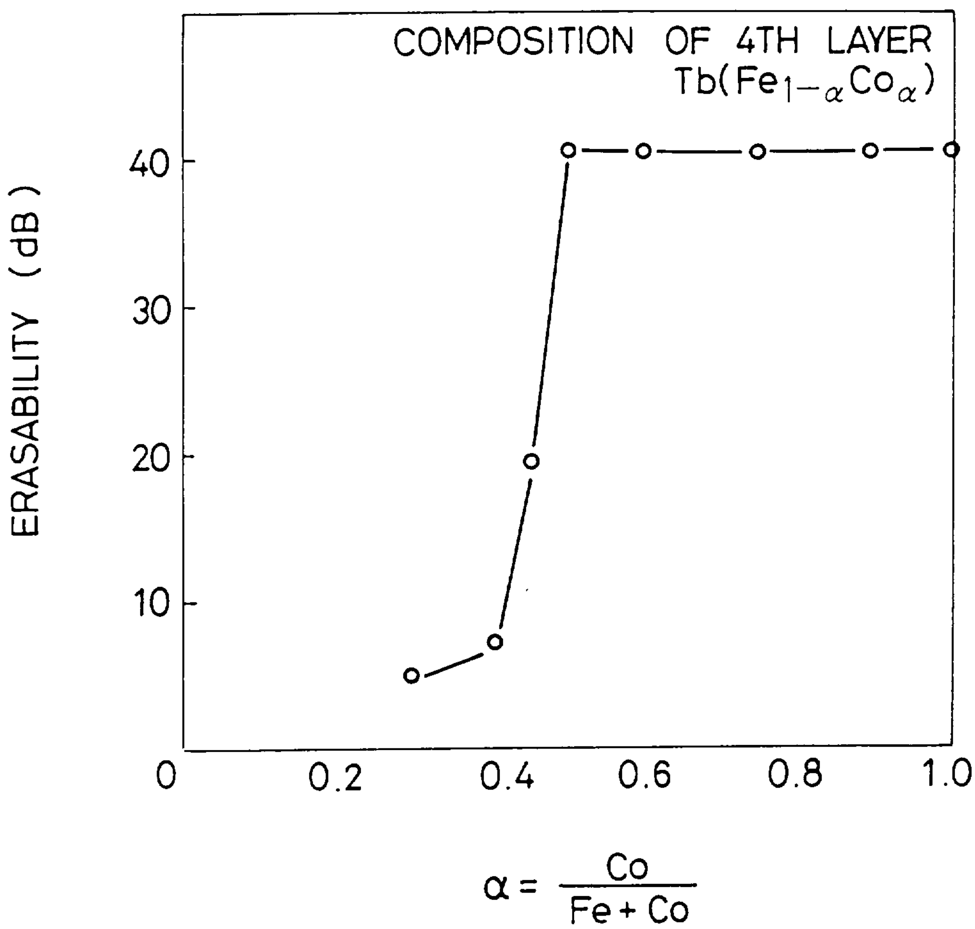
COMPOSITION OF 4TH LAYER
$Tb(Fe_{1-\alpha}Co_{\alpha})$
ERASABILITY (dB)
40
30
20
10
0
0.2
0.4
0.6
0.8
1.0
$\alpha = \frac{Co}{Fe + Co}$

F I G. 14

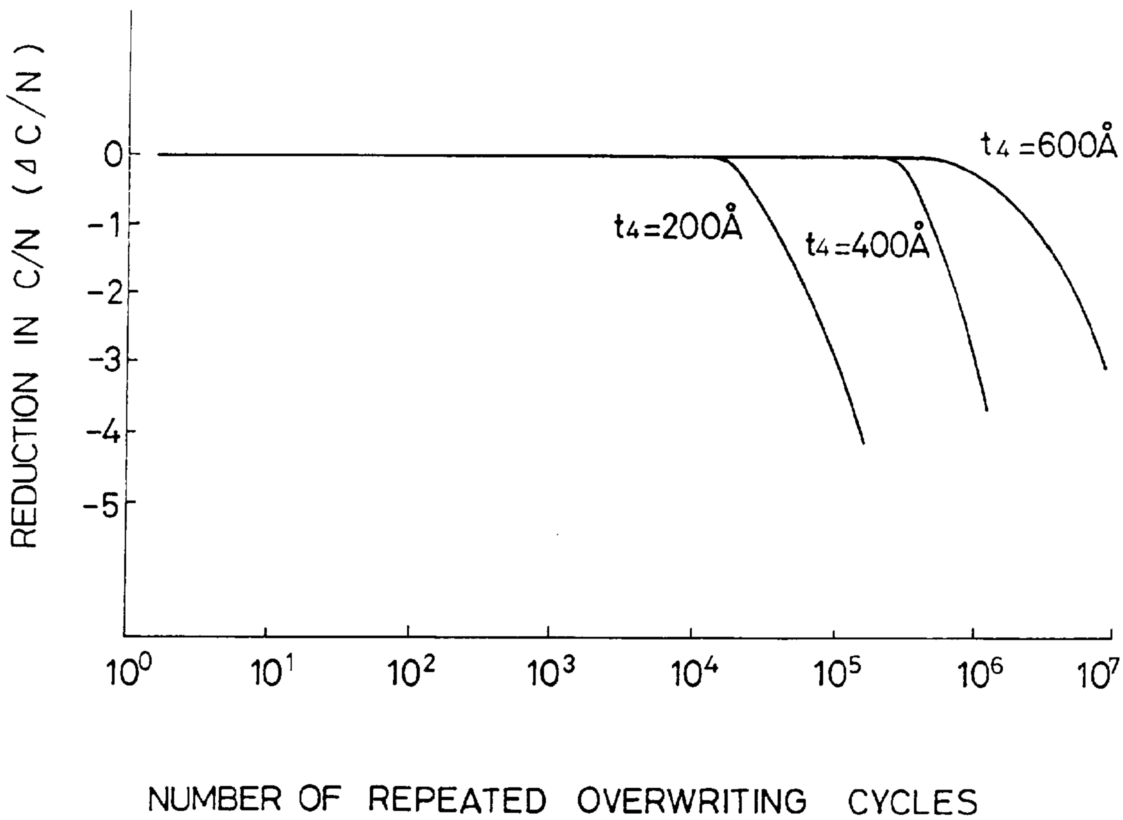
REDUCTION IN C/N (ΔC/N)
0
-1
-2
-3
-4
-5
t4 =600Å
t4=200Å
t4=400Å
10^0
10^1
10^2
10^3
10^4
10^5
10^6
10^7
NUMBER OF REPEATED OVERWRITING CYCLES

F I G. 15

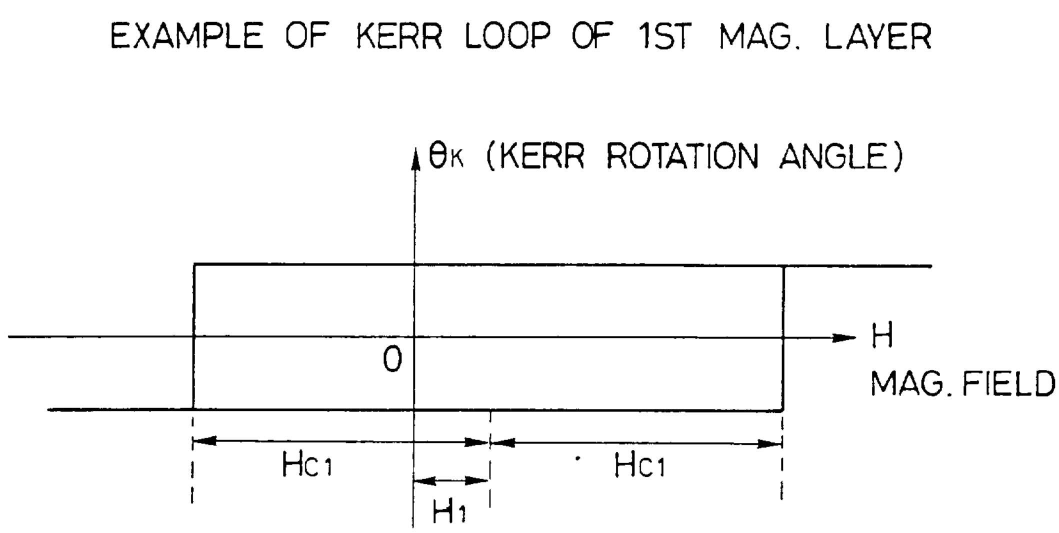
EXAMPLE OF KERR LOOP OF 1ST MAG. LAYER
θK (KERR ROTATION ANGLE)
H
MAG. FIELD
0
Hc1
Hc1
H1

F I G. 16

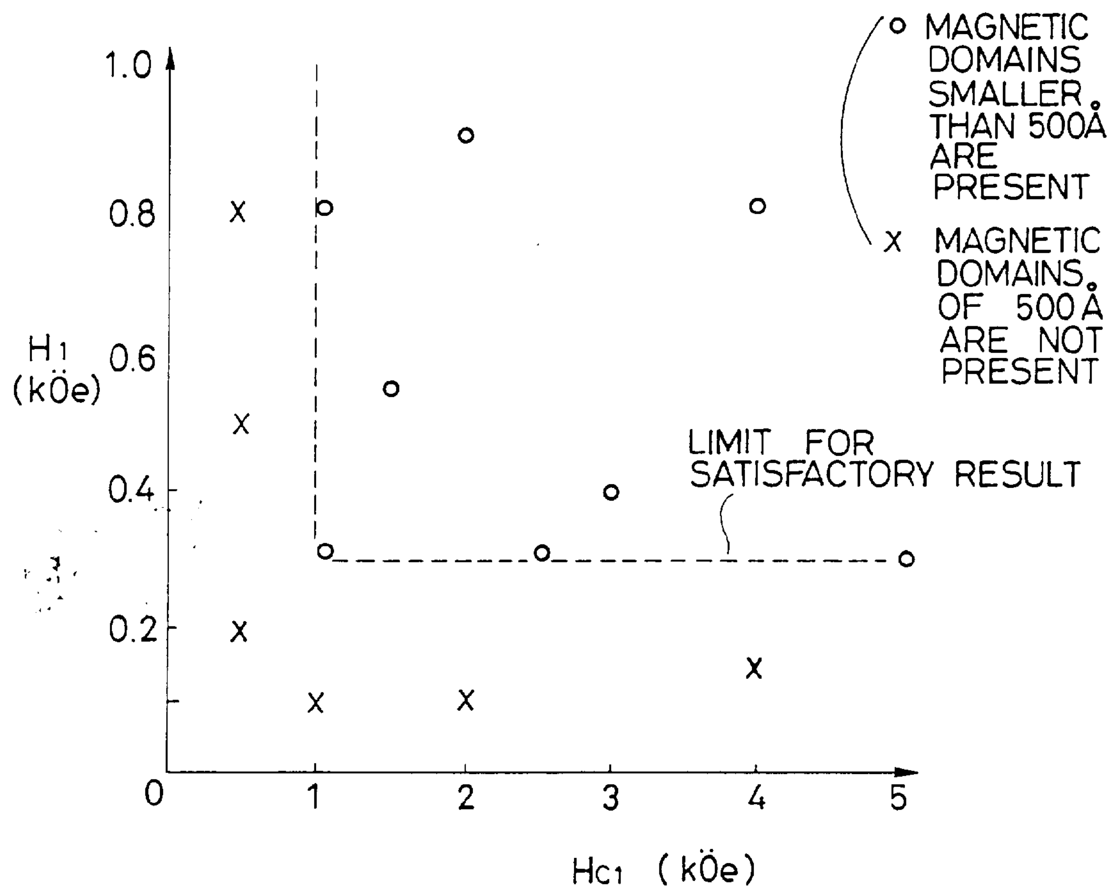
o MAGNETIC DOMAINS SMALLER THAN 500Å ARE PRESENT
x MAGNETIC DOMAINS OF 500Å ARE NOT PRESENT
LIMIT FOR SATISFACTORY RESULT
H1 (kÖe)
Hc1 (kÖe)
1.0
0.8
0.6
0.4
0.2
0
1
2
3
4
5

FIG. 17

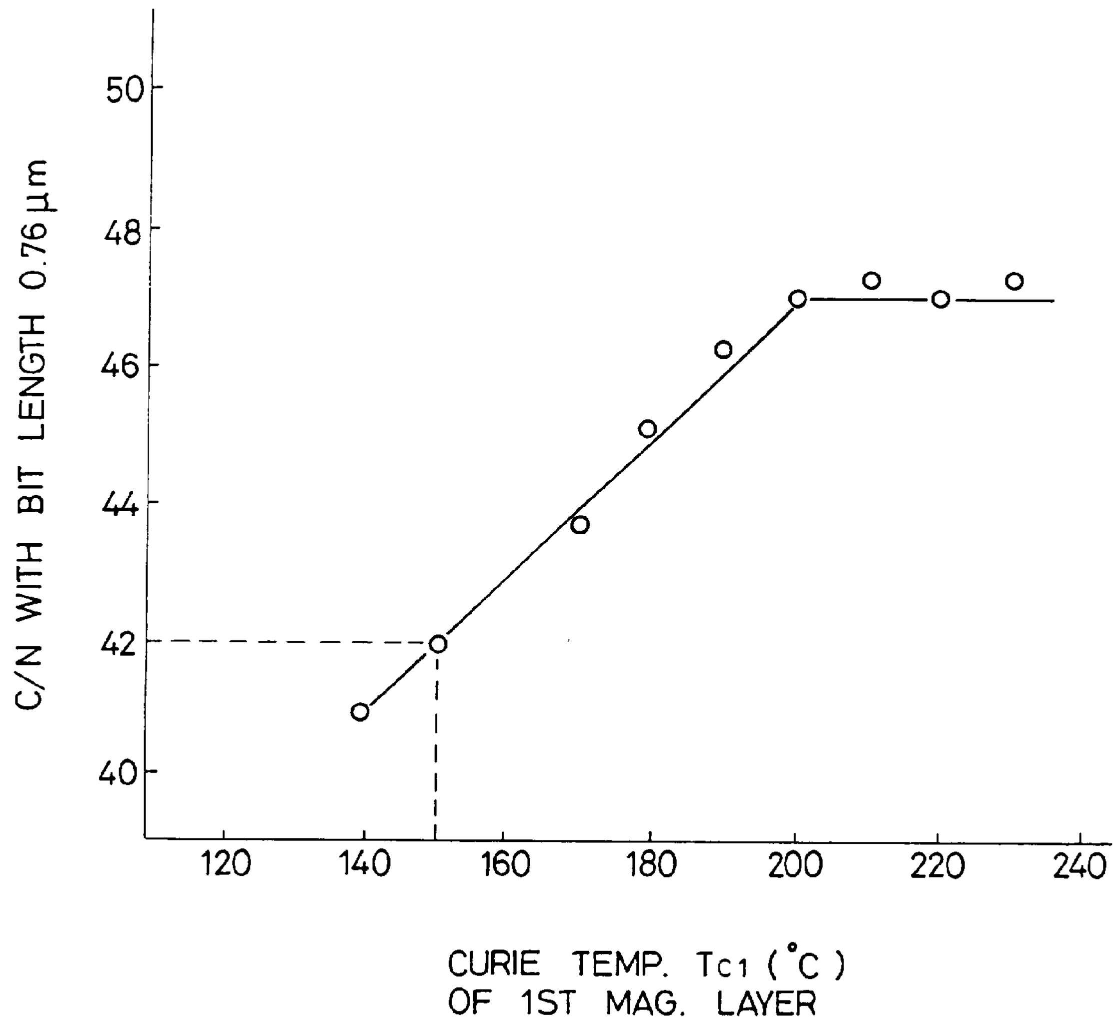
C/N WITH BIT LENGTH 0.76 μm
50
48
46
44
42
40
120
140
160
180
200
220
240
CURIE TEMP. Tc1 (°C)
OF 1ST MAG. LAYER

FIG. 18

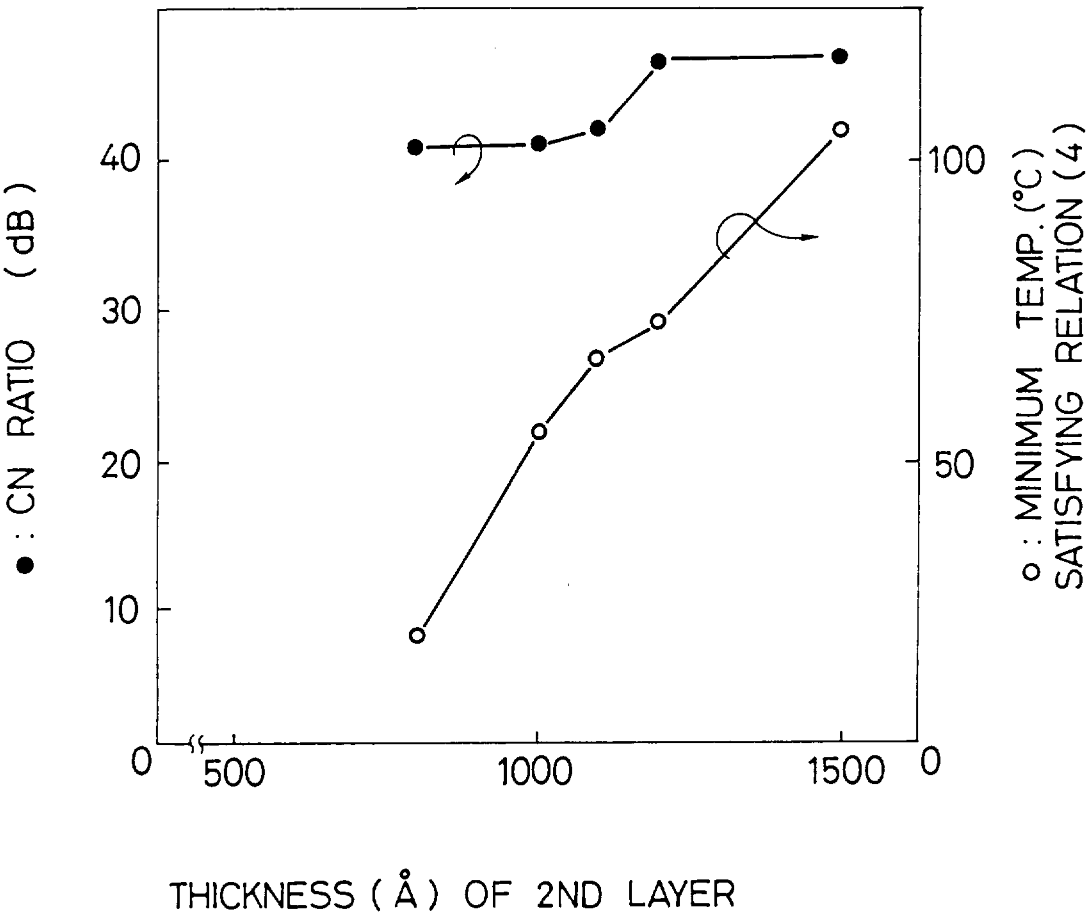
●: CN RATIO (dB)
40
30
20
10
0
100
50
0
○: MINIMUM TEMP. (°C) SATISFYING RELATION (4)
500
1000
1500
THICKNESS (Å) OF 2ND LAYER

FIG. 19

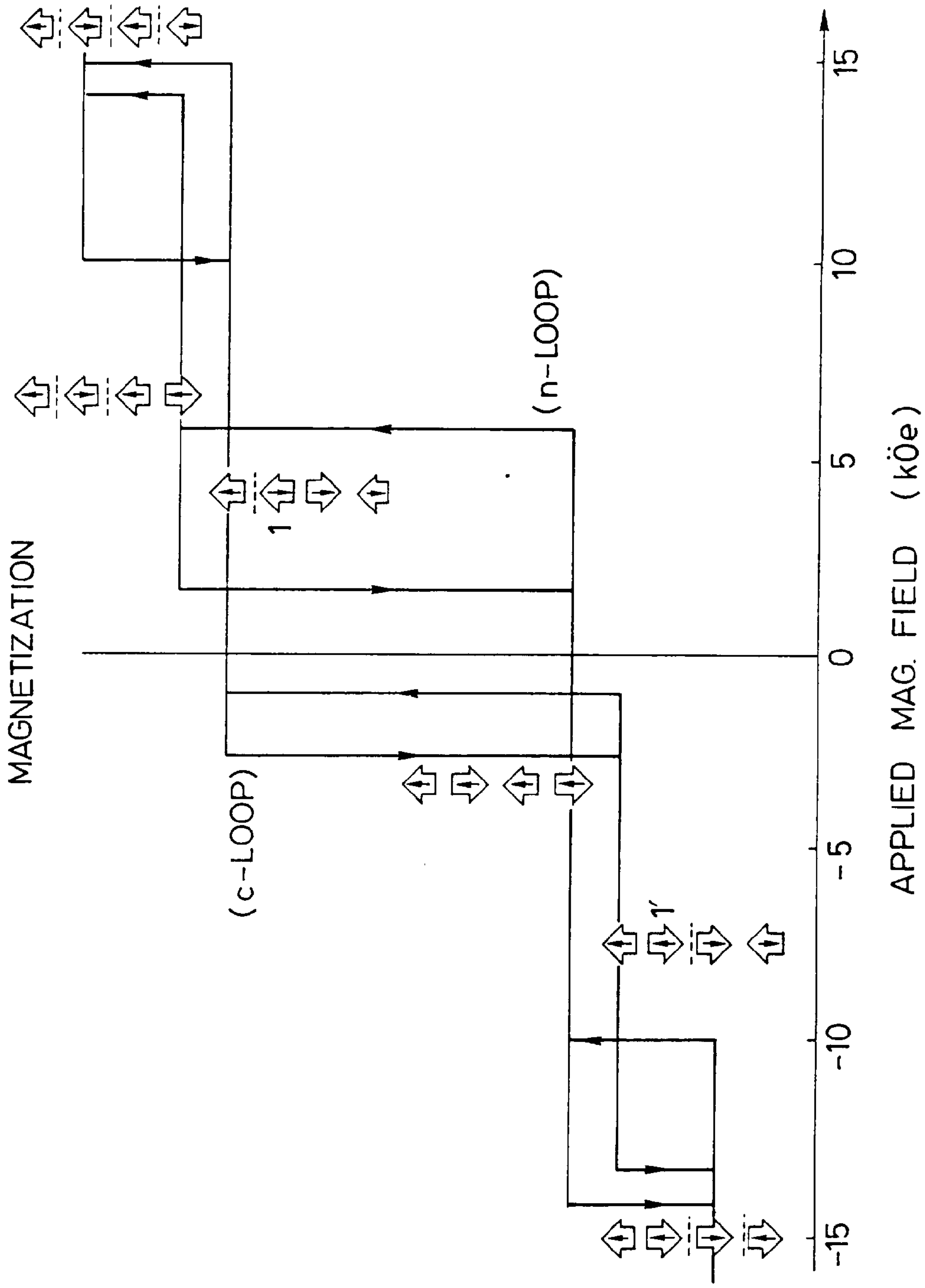
MAGNETIZATION
(n-LOOP)
(c-LOOP)
1
1'
-15
-10
-5
0
5
10
15
APPLIED MAG. FIELD (kÖe)

F I G. 20

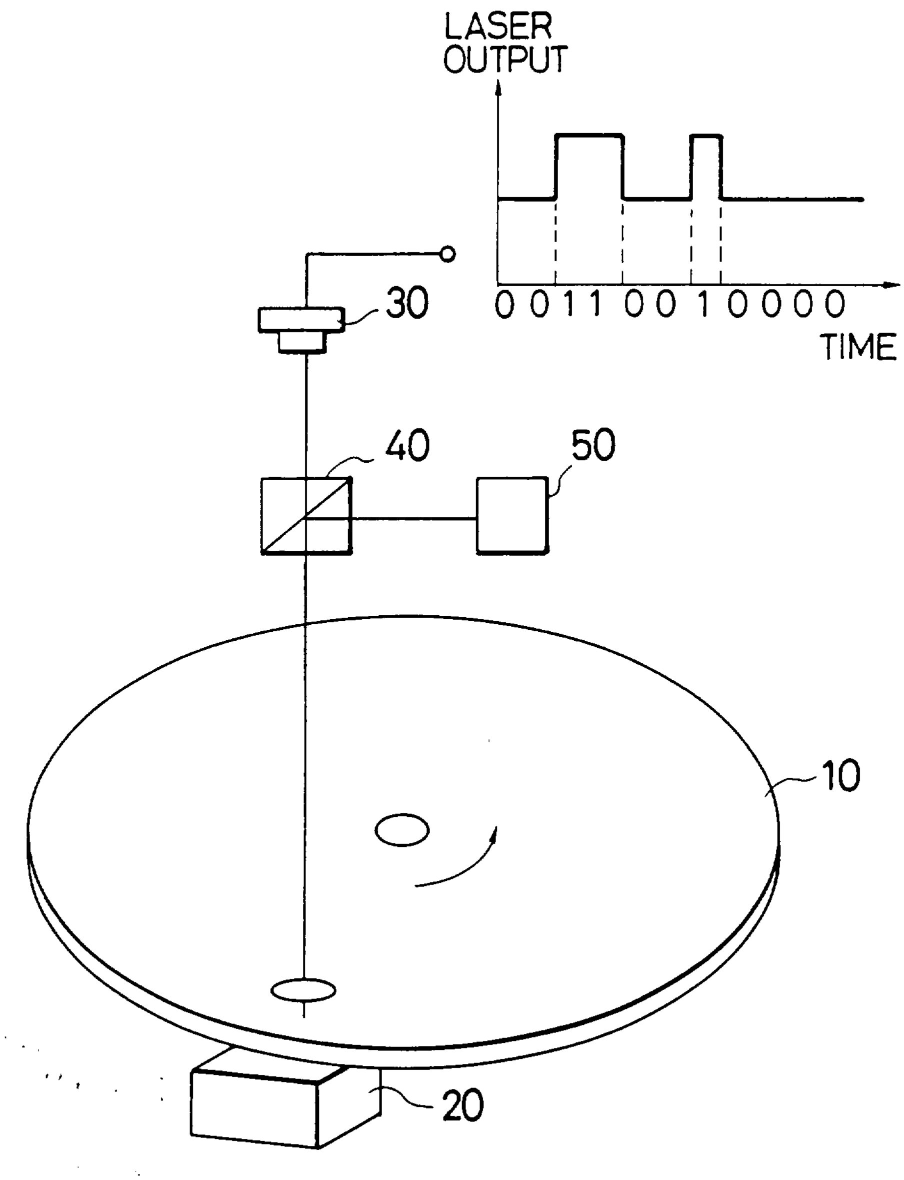

FIG. 21

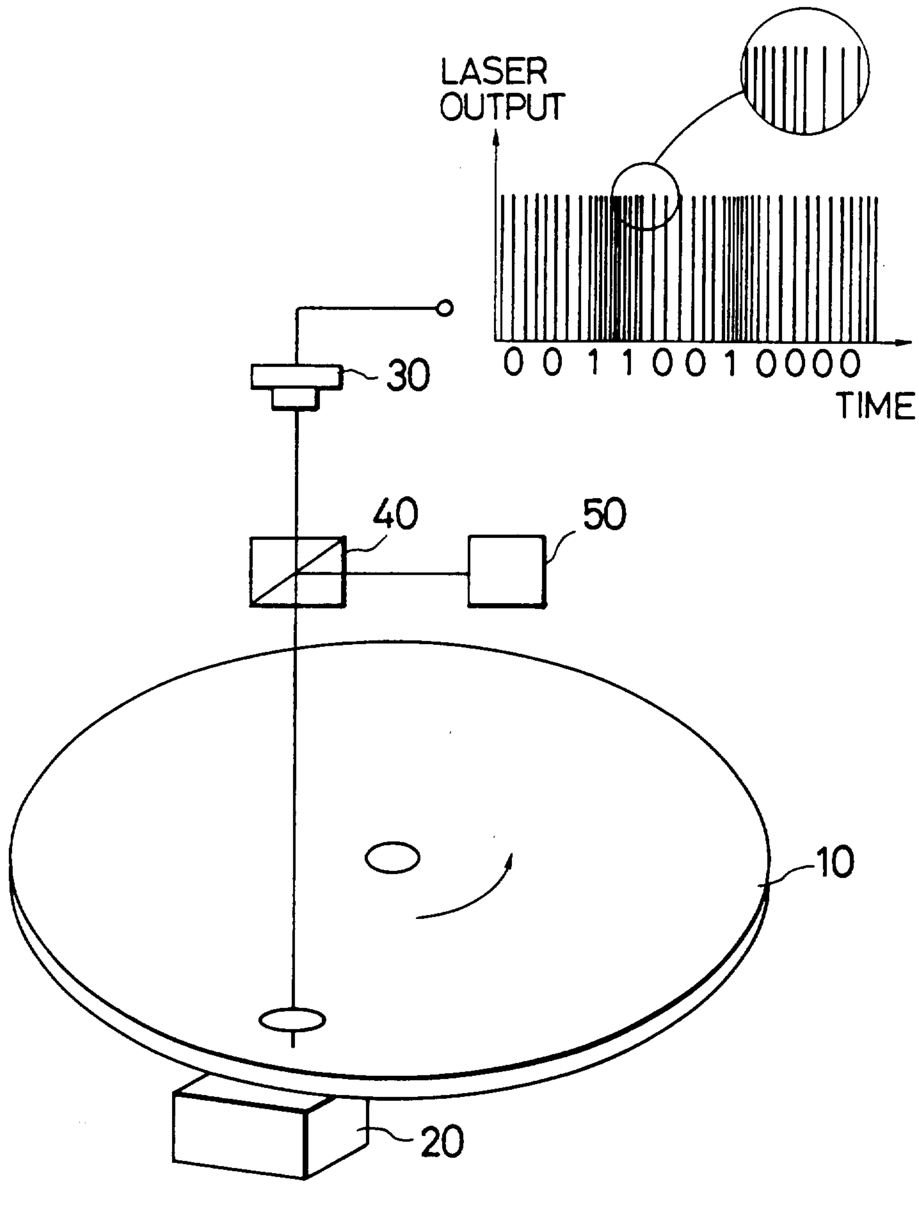

FIG. 22

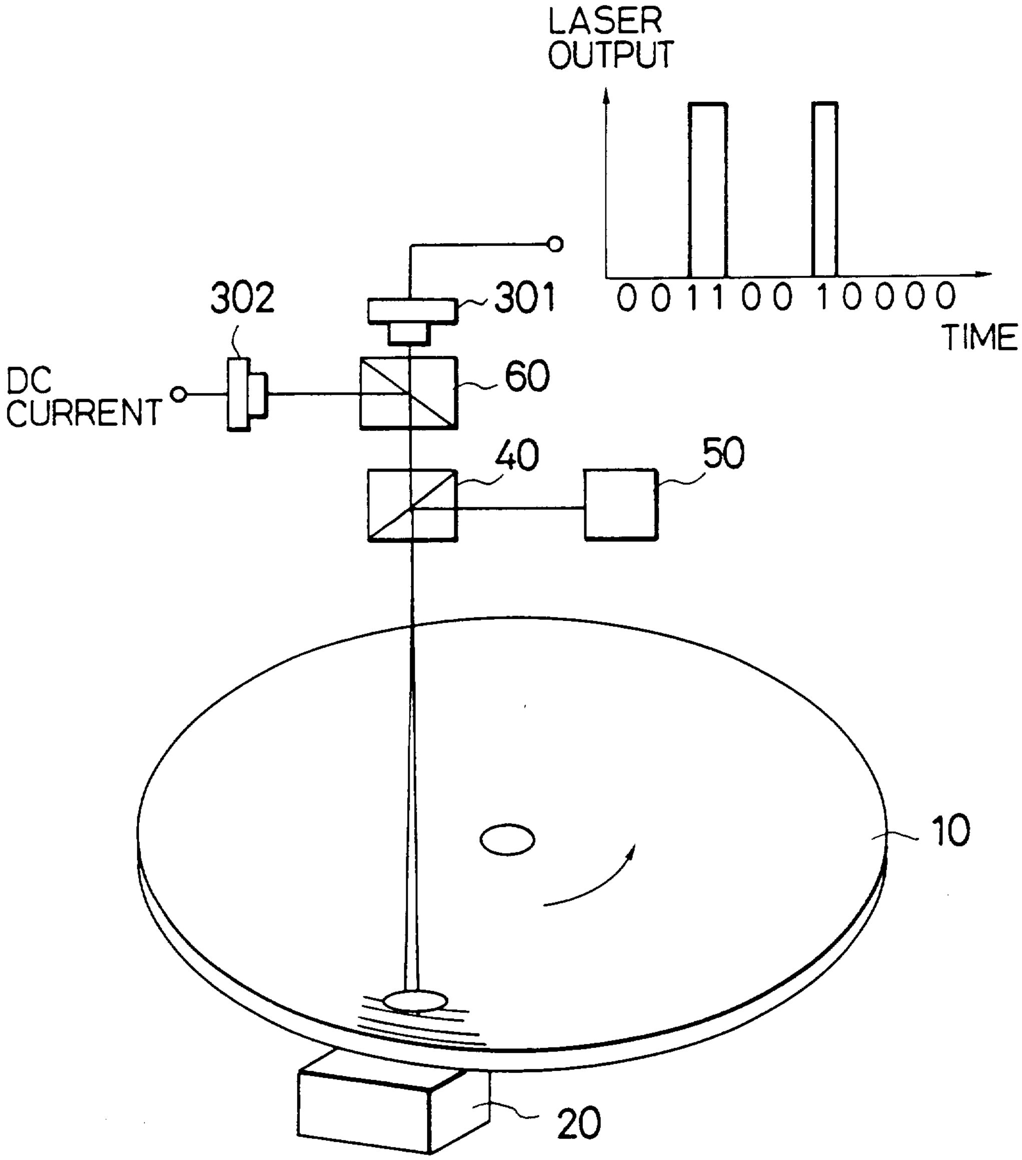
LASER
OUTPUT
0 0 1 1 0 0 1 0 0 0 0
TIME
302
301
DC
CURRENT
60
40
50
10
20

FIG. 23

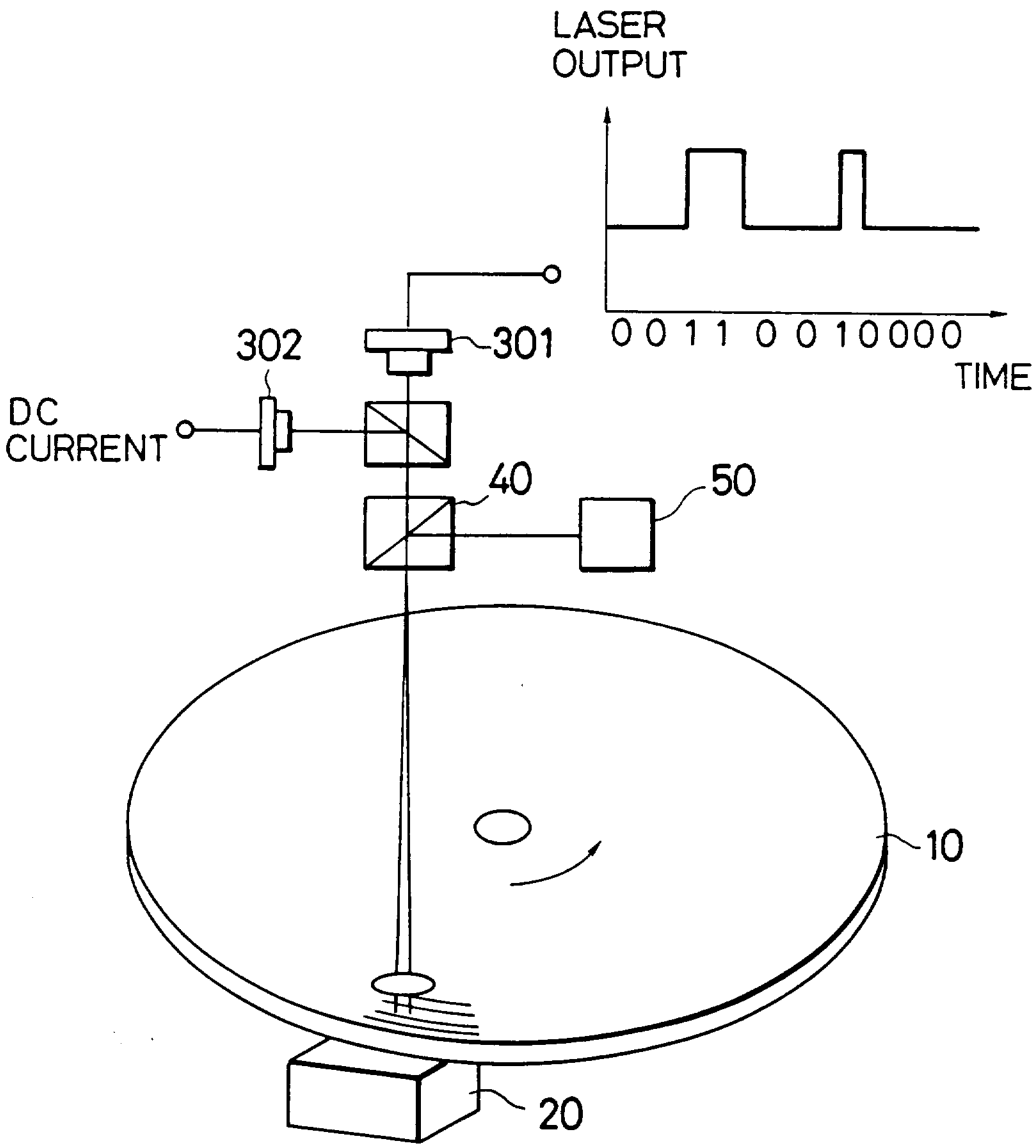

FIG. 24

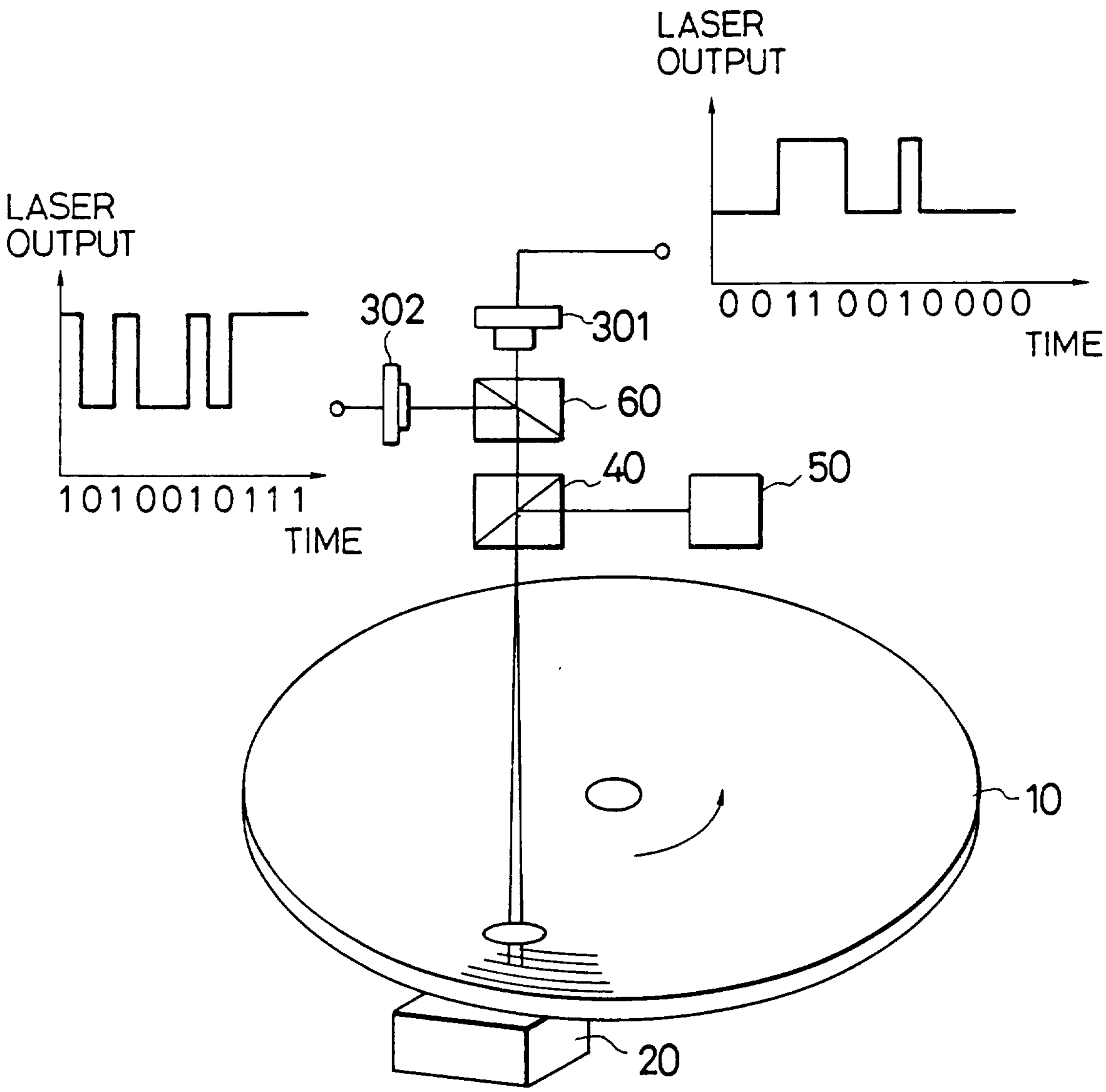
LASER
OUTPUT
TIME
0 0 1 1 0 0 1 0 0 0 0
LASER
OUTPUT
TIME
1 0 1 0 0 1 0 1 1 1
302
301
60
40
50
10
20

FIG. 25A

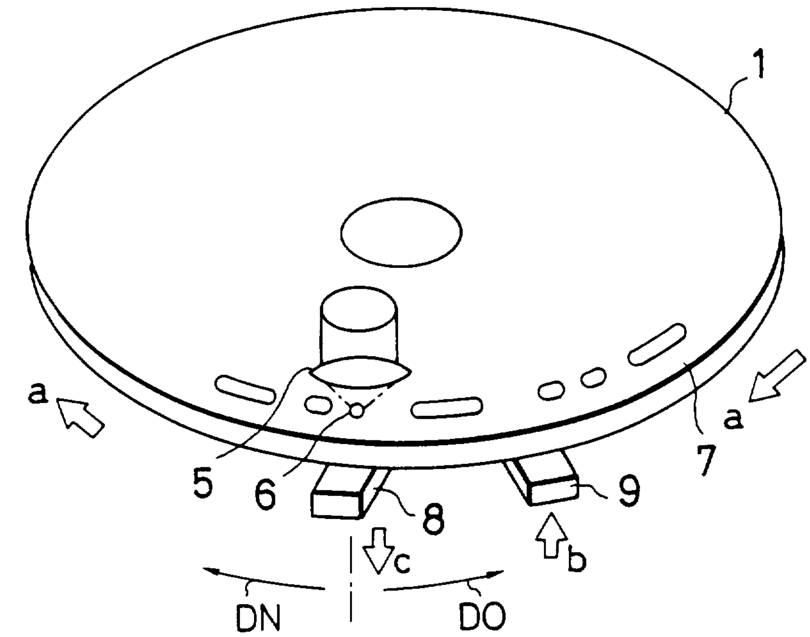


FIG. 25B

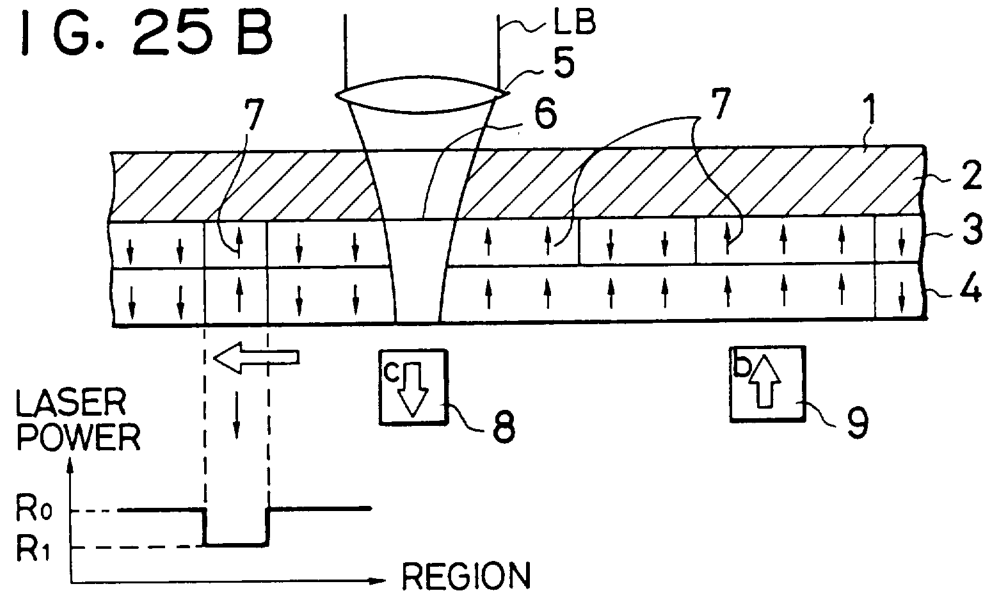

FIG. 26

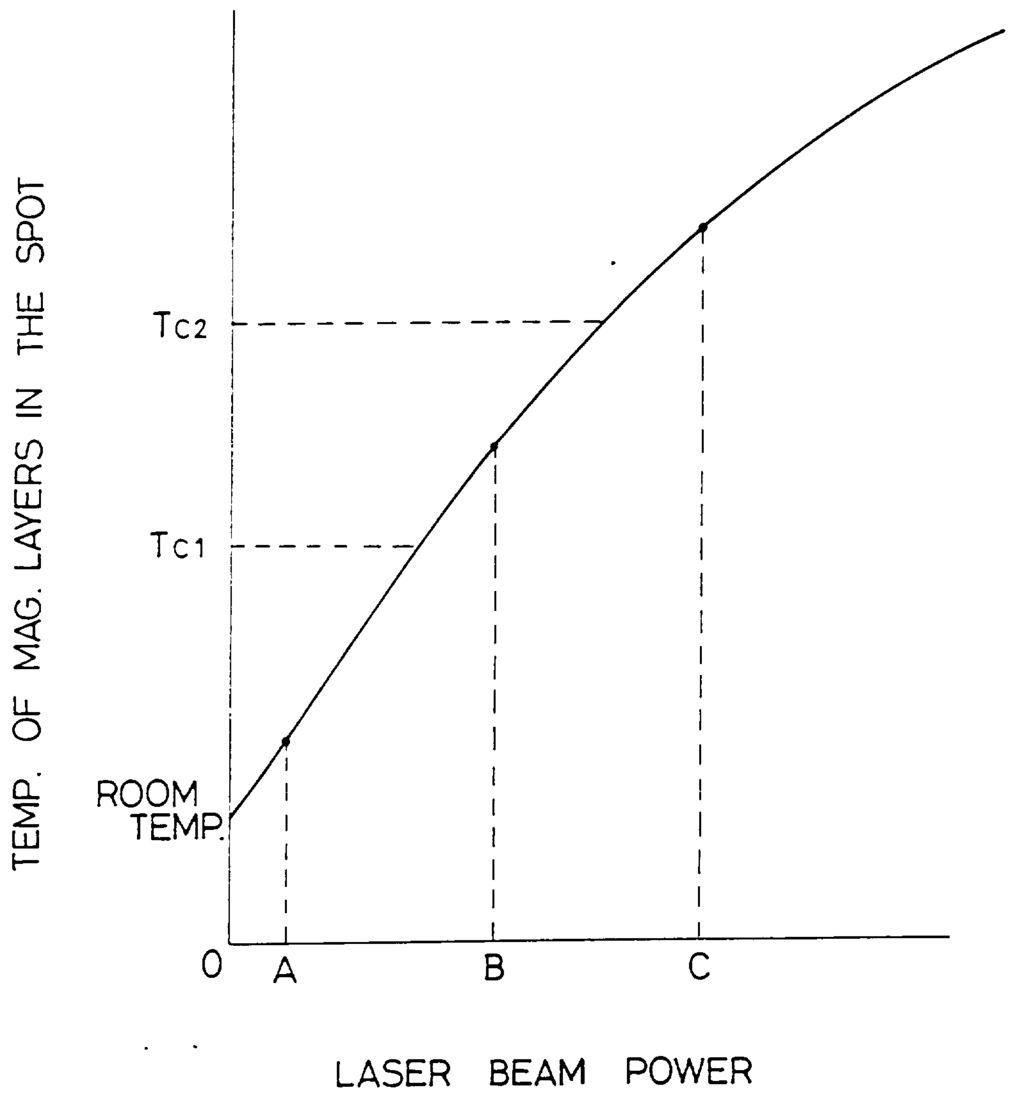
TEMP. OF MAG. LAYERS IN THE SPOT
Tc2
Tc1
ROOM TEMP.
0
A
B
C
LASER BEAM POWER

FIG. 27

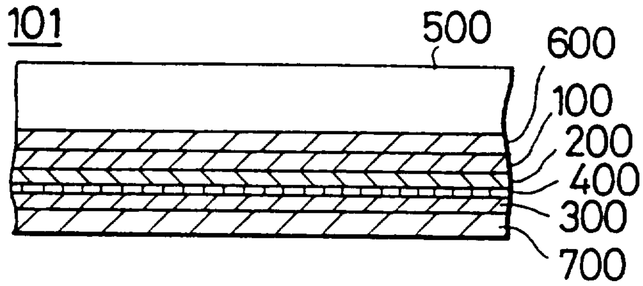
101
500
600
100
200
400
300
700

FIG. 28

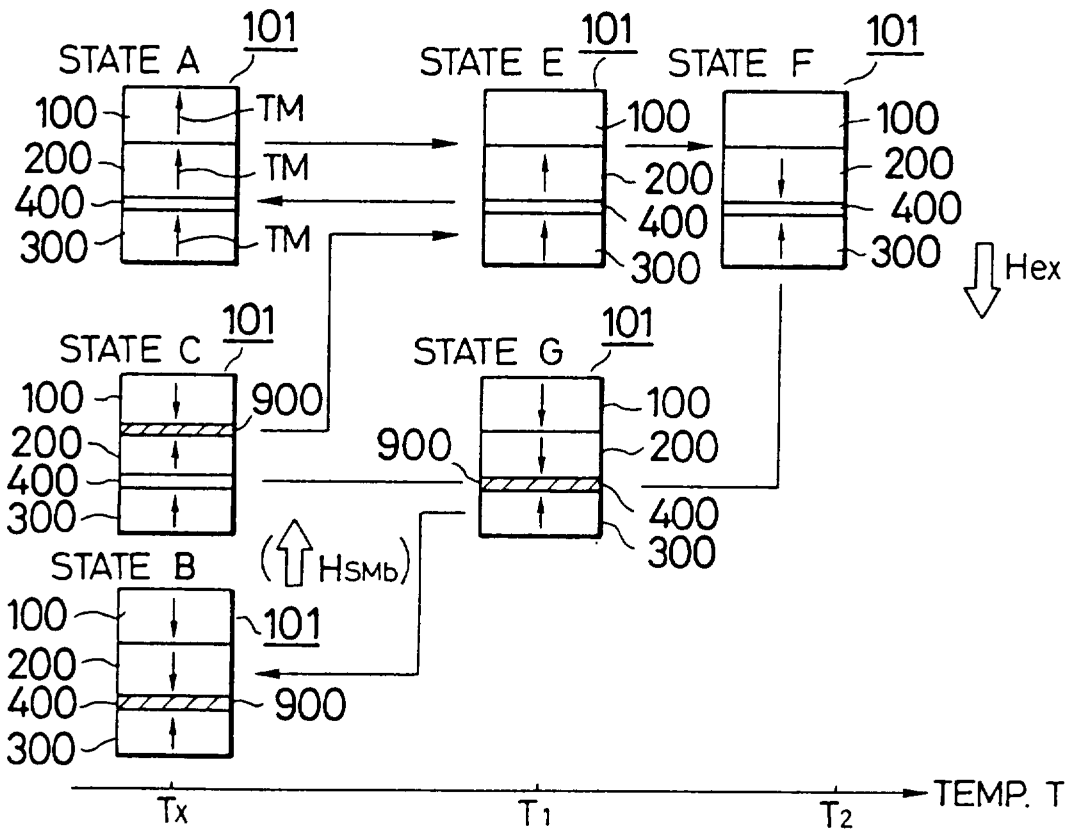
STATE A
101
100
200
400
300
TM
TM
TM
STATE E
101
100
200
400
300
STATE F
101
100
200
400
300
Hex
STATE C
101
100
200
400
300
900
STATE G
101
900
100
200
400
300
STATE B
(HSMb)
100
200
400
300
101
900
Tx
T1
T2
TEMP. T

F I G. 29

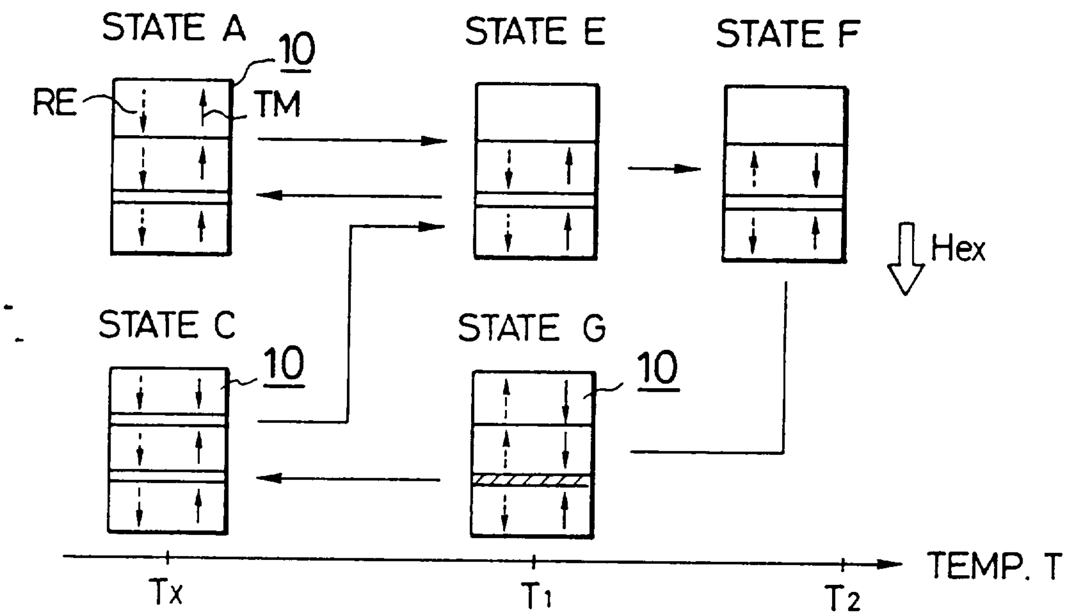
STATE A
10
RE
TM
STATE E
STATE F
Hex
STATE C
10
STATE G
10
Tx
T1
T2
TEMP. T

F I G. 30

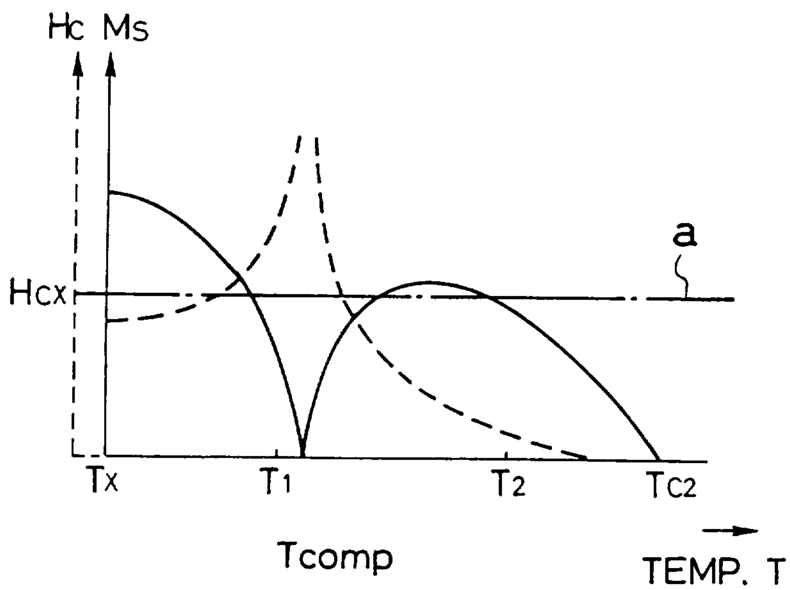
Hc Ms
a
Hcx
Tx
T1
T2
Tc2
Tcomp
TEMP. T

FIG. 31

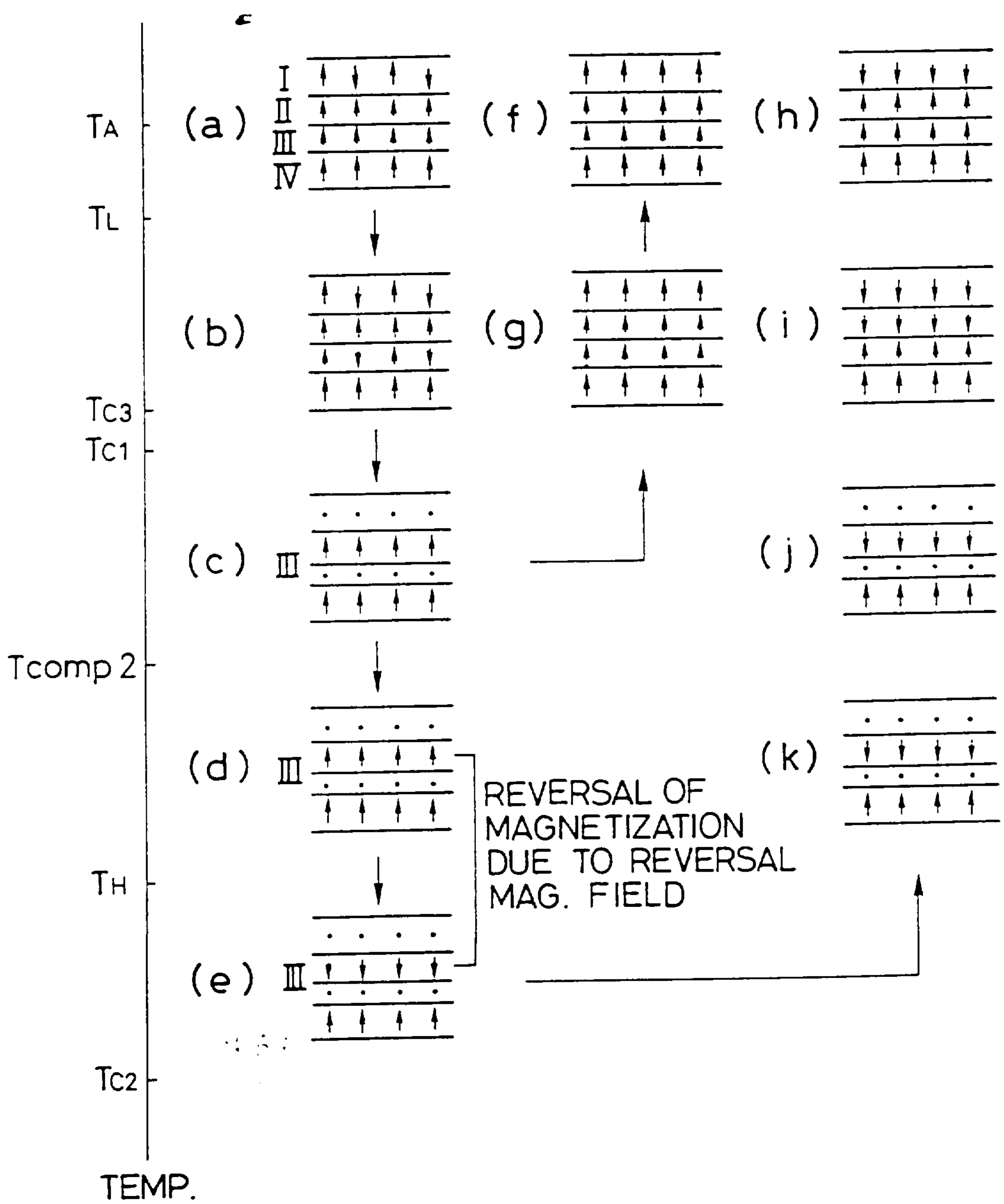
TA
TL
TC3
TC1
Tcomp 2
TH
TC2
TEMP.
(a)
I
II
III
IV
(b)
(c)
III
(d)
III
(e)
III
(f)
(g)
(h)
(i)
(j)
(k)
REVERSAL OF MAGNETIZATION DUE TO REVERSAL MAG. FIELD